# EUROPEAN PATENT APPLICATION

(11) **EP 4 665 071 A1**
(43) Date of publication of application: **17.12.2025**
(21) Application number: 23920535.4
(22) Date of filing: 10.02.2023
(51) Int. Cl.: H04W 76/15

(54) **MULTI-LINK-DEVICE COMMUNICATION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN); ZHOU, Pei, Dongguan, Guangdong 523860 (CN)
(74) Representative: Novagraaf Technologies
(86) International application number: PCT/CN2023/075511
(87) International publication number: WO 2024/164327

(57) **Abstract**

The present application discloses a multi-link-device communication method and apparatus, a device, a medium, and a program product, and belongs to the field of communication. The method is performed by an access point multi-link device (AP MLD), and comprises: sending a first frame carrying first indication information, the first indication information being used for indicating at least one of: whether the AP MLD supports an MLO type or mode based on a managing and controlling link and a managed and controlled link; whether the AP MLD supports a managed and controlled link; and whether the AP MLD supports a millimeter wave link and a corresponding operation mode. The method allows, when a managed and controlled link is supported, for using a millimeter wave link as a managed and controlled link, achieving millimeter wave communication between an access point and a station according to a supported operating mode.

## Description

### TECHNICAL FIELD

Embodiments of the present disclosure relate to the field of communications, and in particular, relate to a method and apparatus for multi-link device (MLD) communication, and a device, a medium, and a program product thereof.

### RELATED ART

Wireless fidelity (Wi-Fi) communication provides a throughput of multiple gigabits per second (Gbps) using millimeter wave communication.

In a case where managed and controlled links including millimeter wave links are supported, no technical solution has been proposed on how to implement millimeter wave communication between an access point (AP) and a station (STA).

### SUMMARY

The present disclosure provides a method and apparatus for MLD communication, and a device, a medium, and a program product thereof. The technical solutions at least include the following contents.

According to some embodiments of the present disclosure, a method for MLD communication is provided. The method is performed by an AP MLD. The method includes: transmitting a first frame carrying first indication information, wherein the first indication information indicates whether the AP MLD supports at least one of a multi-link operation (MLO) type or mode based on a managing and controlling link and a managed and controlled link, supports the managed and controlled link, supports a millimeter wave link, or supports a corresponding operation mode.

According to some embodiments of the present disclosure, a method for MLD communication is provided. The method is performed by a non-access point (non-AP) MLD. The method includes: receiving a first frame carrying first indication information, wherein the first indication information indicates whether an AP MLD corresponding to the non-AP MLD supports at least one of an MLO type or mode based on a managing and controlling link and a managed and controlled link, supports the managed and controlled link, supports a millimeter wave link, or supports a corresponding operation mode.

According to some embodiments of the present disclosure, an apparatus for MLD communication is provided. The apparatus includes: a transmitting module, configured to transmit a first frame carrying first indication information, wherein the first indication information indicates whether an AP MLD supports at least one of an MLO type or mode based on a managing and controlling link and a managed and controlled link, supports the managed and controlled link, supports a millimeter wave link, or supports a corresponding operation mode.

According to some embodiments of the present disclosure, an apparatus for MLD communication is provided. The apparatus includes: a receiving module, configured to receive a first frame carrying first indication information, wherein the first indication information indicates whether an AP MLD corresponding to a non-AP MLD supports at least one of a MLO type or mode based on a managing and controlling link and a managed and controlled link, supports the managed and controlled link, supports a millimeter wave link, or supports a corresponding operation mode.

According to some embodiments of the present disclosure, an AP MLD is provided. The AP MLD includes: a processor; a transceiver connected to the processor; and a memory configured to store one or more instructions executable by the processor. The processor is configured to load and execute the one or more executable instructions to perform the method for MLD communication as defined in the above aspects.

According to some embodiments of the present disclosure, a non-AP MLD is provided. The non-AP MLD includes: a processor; a transceiver connected to the processor; and a memory configured to store one or more instructions executable by the processor. The processor is configured to load and execute the one or more executable instructions to perform the method for MLD communication as defined in the above aspects.

According to some embodiments of the present disclosure, a computer-readable storage medium is provided. The computer-readable storage medium stores at least one instruction, at least one program, a code set, or an instruction set. The at least one instruction, the at least one program, the code set, or the instruction set, when loaded and executed by the processor, cause an AP MLD or a non-AP MLD to perform the method for MLD communication as defined in the above aspects.

According to some embodiments of the present disclosure, a computer program product or a computer program is provided. The computer program product or the computer program includes one or more computer instructions stored in a computer-readable storage medium. The one or more computer instructions, when read by a processor from the computer-readable storage medium and executed by the processor, cause an AP MLD or a non-AP MLD to perform the method for MLD communication as defined in the above aspects.

The technical solutions according to the embodiments of the present disclosure achieve the following beneficial effects.

The first frame carrying the first indication information is transmitted, wherein the first indication information indicates whether the AP MLD supports at least one of the MLO type or mode based on the managing and controlling link and the managed and controlled link, the managed and controlled link, the millimeter wave link, or a corresponding operation mode, such that in a case where the managed and controlled link is supported, the millimeter wave link is be used as the managed and controlled link, thereby implementing millimeter wave communication between the AP and the STA based on a supported operation mode.

### BRIEF DESCRIPTION OF THE DRAWINGS

For clearer illustration of the technical solutions in the embodiments of the present disclosure, the accompanying drawings required to be used in the description of the embodiments are briefly introduced hereinafter. It is apparent that the accompanying drawings in the description hereinafter are only for some embodiments of the present disclosure, and for those of ordinary skill in the art, other accompanying drawings can be acquired according to the accompanying drawings without creative efforts.
FIG. 1 is a schematic diagram of a communication system according to some embodiments of the present disclosure;
FIG. 2 is a flowchart of a method for frame interaction during multi-link discovery and setup according to a related art;
FIG. 3 is a schematic diagram of a beacon interval according to a related art;
FIG. 4 is a schematic diagram of frame exchange during a beacon interval according to a related art;
FIG. 5 is a flowchart of a method for MLD communication according to some embodiments of the present disclosure;
FIG. 6 is a schematic diagram of a format of a Basic Multi-link element according to some embodiments of the present disclosure;
FIG. 7 is a schematic diagram of a format of a Common Information field according to some embodiments of the present disclosure;
FIG. 8 is a schematic diagram of a format of an MLD Capabilities and Operations field according to some embodiments of the present disclosure;
FIG. 9 is a flowchart of a method for MLD communication according to some embodiments of the present disclosure;
FIG. 10 is a schematic diagram of a format of a Reduced Neighbor Report element according to some embodiments of the present disclosure;
FIG. 11 is a schematic diagram of a format of a Neighbor AP Information field according to some embodiments of the present disclosure;
FIG. 12 is a schematic diagram of a format of a Target Beacon Transmission Time (TBTT) Information Header field according to some embodiments of the present disclosure;
FIG. 13 is a schematic diagram of a format of a TBTT Information field according to some exemplary embodiments of the present disclosure;
FIG. 14 is a schematic diagram of a format of a TBTT Information field according to some embodiments of the present disclosure;
FIG. 15 is a schematic diagram of a format of a TBTT Information field according to some embodiments of the present disclosure;
FIG. 16 is a schematic diagram of a format of an MLD Parameters subfield according to some embodiments of the present disclosure;
FIG. 17 is a schematic diagram of a format of an MLD Parameters subfield according to some embodiments of the present disclosure;
FIG. 18 is a schematic diagram of a format of an MLD Parameters subfield according to some embodiments of the present disclosure;
FIG. 19 is a schematic diagram of a format of a TBTT Information field according to some embodiments of the present disclosure;
FIG. 20 is a schematic diagram of a format of an MLD Parameters subfield according to some embodiments of the present disclosure;
FIG. 21 is a flowchart of a method for MLD communication according to some embodiments of the present disclosure;
FIG. 22 is a flowchart of a method for MLD communication according to some embodiments of the present disclosure;
FIG. 23 is a block diagram of an apparatus for MLD communication according to some embodiments of the present disclosure;
FIG. 24 is a block diagram of an apparatus for MLD communication according to some embodiments of the present disclosure; and
FIG. 25 is a schematic structural diagram of an AP MLD or a non-AP MLD according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

Reference is made in detail to the embodiments, examples of which are illustrated in the accompanying drawings. When the following description refers to the accompanying drawings, same numbers in different accompanying drawings represent same or similar elements unless otherwise indicated. The embodiments described in the following embodiments do not represent all embodiments consistent with the present disclosure. Rather, these embodiments are merely examples of apparatus and methods consistent with some aspects of the present disclosure.

Terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" used herein refers to and encompasses any or all possible combinations of one or more associated listed items.

It should be noted that user information (including but not limited to user device information, user personal information, or the like) and data (including but not limited to data for analysis, stored data, displayed data, or the like), which are referred to in the present disclosure, are information and data authorized by the user or fully authorized by various parties, and the collection, use, and processing of the relevant data are required to comply with relevant laws and regulations and standards in relevant countries and regions.

It should be understood that although the terms "first," "second," or the like may be used herein to describe various information, such information should not be limited to these terms. These terms are only used to distinguish one type of information from another. For example, a first parameter may be referred to as a second parameter, and similarly, a second parameter may be referred to as a first parameter, without departing from the scope of the present disclosure. The words "if' and "when," as used herein, may be interpreted as "in a case that", "in a case where", or "in response to determining that", depending on the context.

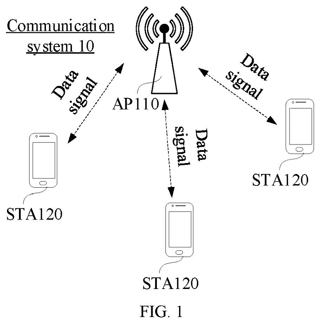

FIG. 1 is a schematic diagram of a communication system 10 according to some embodiments of the present disclosure. The communication system 10 includes a terminal and a terminal, or a terminal and a network device, or an AP and an STA, which is not limited in the present disclosure. In the present disclosure, the communication system 10 is illustrated by an example where an AP 110 and an STA 120 are included.

In some scenarios, the AP is also referred to as an AP STA. That is, in a sense, the AP is also a type of STA. In some scenarios, the STA is also referred to as a non-AP STA.

In some embodiments, STAs include AP STAs and non-AP STAs.

The communication within the communication system involves communication between the AP and the non-AP STA, communication between non-AP STAs, or communication between the STA and a peer STA. The peer STA refers to a device that is in peer-to-peer communication with the STA. For example, the peer STA is an AP or a non-AP STA.

The AP functions as a bridge connecting a wired network to a wireless network, primarily serving to connect various wireless network clients together and then connect the wireless network to the Ethernet. An AP device may be a terminal device (e.g., mobile phone) equipped with a Wi-Fi chip or a network device (e.g., a wireless router).

It should be understood that the function of the STA in the communication system is dynamic. For example, in some scenarios, the mobile phone serves as a non-AP STA in a case where a mobile phone is connected to a router, and the mobile phone serves as an AP in a case where the mobile phone acts as a hotspot for another mobile phone.

Both the AP and the non-AP STA may be devices applicable to the Internet of vehicles, nodes and sensors in the Internet of things (IoT), smart cameras, smart remotes, smart water meters and electricity meters in smart homes, sensors in smart cities, or the like.

In some embodiments, the non-AP STA supports, but is not limited to, the 802.11bf standard. The non-AP STA may also support various current and future wireless local area network (WLAN) standards of the 802.11 series, such as 802.11ax, 802.11ac, 802.11n, 802.11g, 802.11b, and 802.11a.

In some embodiments, the AP is a device that supports the 802.11bf standard. The AP may also be a device that supports various current and future WLAN standards of the 802.11 series, such as 802.11ax, 802.11ac, 802.11n, 802.11g, 802.11b, and 802.11a.

In the embodiments of the present disclosure, the STA may be a device that supports WLAN/Wi-Fi, such as a mobile phone, a Pad, a computer, a virtual reality (VR) device, an augmented reality (AR) device, a wireless device in industrial control, a set-top box, a wireless device in self-driving, an in-vehicle communication device, a wireless device in remote medical application, a wireless device in smart grids, a wireless device in transportation safety, a wireless device in smart cities, a wireless device in smart homes, a wireless communication chip, or the like.

Frequency bands supported by the WLAN technology include but are not limited to low-frequency bands (2.4 GHz, 5 GHz, and 6 GHz) and a high-frequency band (60 GHz).

One or more links are present between the STA and the AP. In some embodiments, the STA and the AP support multi-frequency-band communications, e.g., simultaneous communications at 2.4 GHz, 5 GHz, 6 GHz, and 60 GHz bands, or simultaneous communications in different channels of the same frequency band (or different frequency bands), such that the communication throughput and/or reliability between devices are improved. Such devices are often referred to as multi-frequency-band devices, MLDs, multi-link entities, or multi-frequency-band entities. The MLD is an AP device or an STA device. In a case where the MLD is an AP device, the MLD includes one or more APs. In a case where the MLD is an STA device, the MLD includes one or more non-AP STAs.

The MLD including one or more APs is also referred to as an AP, and the MLD including one or more non-AP STAs is also referred to as a non-AP. In the embodiments of the present disclosure, the non-AP is also referred to as an STA.

In the embodiments of the present disclosure, the AP may include a plurality of APs, the non-AP includes a plurality of STAs, a plurality of links are formed between the plurality of APs in the AP and the plurality of STAs in the non-AP, and data communication between the APs in the AP and the corresponding STAs in the non-AP is achieved over the corresponding links.

The AP is a device deployed in a WLAN to provide a wireless communication function to the STA. The STA may include: a user equipment (UE), an access terminal, a subscriber unit, a user station, a mobile station, a mobile console, a remote station, a remote terminal, a mobile device, a wireless communication device, a user agent, a user apparatus, or the like. In some embodiments, the STA may be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In the embodiments of the present disclosure, the STA and the AP both support the Institute of Electrical and Electronics Engineers (IEEE) 802.11 standard, but are not limited to, the IEEE 802.11 standard.

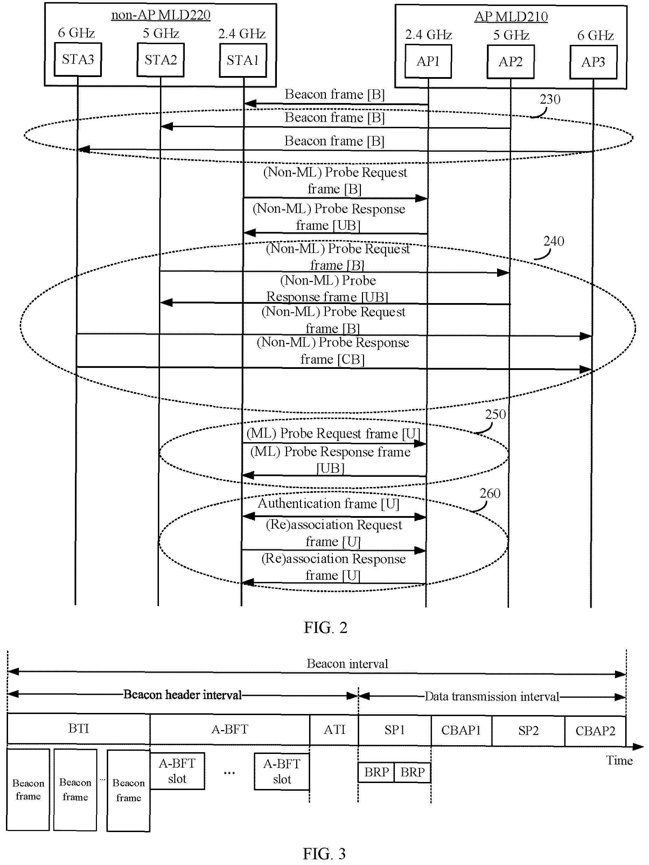

FIG. 2 is a flowchart of a method for frame interaction during multi-link discovery and setup according to a related art. The method is applicable to an AP MLD 210 and a non-AP MLD 220. The AP MLD 210 includes: an AP 1 supporting 2.4 GHz, an AP 2 supporting 5 GHz, and an AP 3 supporting 6 GHz; and the non-AP MLD 220 includes: an STA 1 supporting 2.4 GHz, an STA 2 supporting 5 GHz, and an STA 3 supporting 6 GHz.

Prior to initiating a multi-link setup to the AP MLD 210, the non-AP MLD 220 acquires information of each of its affiliated APs of interest and AP MLD 210 in one or more of the following manners, wherein [B] represents broadcast, [U] represents unicast, [UB] represents unicast or broadcast, and [CB] represents conditionally broadcast, such as broadcast at 6 GHz.

1) A passive scanning or active scanning procedure related to non-MLO is performed by each affiliated STA of the non-AP MLD 220, wherein the non-MLO is compliant with the provisions in the IEEE 802.11 standard.

Passive scanning: The STA passively monitors a Beacon frame periodically broadcast by the AP on a specified channel. For example, in option 230, the AP 2 broadcasts the Beacon frame, and the AP 3 broadcasts the Beacon frame.

The Beacon frame may carry information such as capability information and a service set identifier (SSID).

Active scanning: The STA actively transmits a Probe Request frame to the AP and receives a Probe Response frame from the AP. For example, in option 240, the STA 2 transmits a Probe Request frame to the AP 2, and the AP 2 transmits a Probe Response frame to the STA 2; the STA 3 transmits a Probe Request frame to the AP 3, and the AP 3 transmits a Probe Response frame to the STA 3.

The Probe Request frame and the Probe Response frame may carry information such as capability information, SSID, and extended capability. The capability information in the above different frames refers to capability information of a device transmitting a current frame.

2) Complete information of the AP MLD 210 and affiliated APs thereof is acquired by transmitting a multi-link probe request by one of the affiliated STAs of the non-AP MLD 220 on any link operated by the AP MLD 210.

For example, in option 250, the STA 1 transmits a Probe Request frame to the AP 1, and the AP 1 transmits a Probe Response frame to the STA 1.

The options 230, 240, and 250 described above are all possible options for the non-AP MLD 220 to acquire information of its affiliated APs of interest and the AP MLD 210. (Possible options for a non-AP MLD to gather information of other APs affiliated with the AP MLD.)

The AP MLD 210 and the non-AP MLD 220 perform a multi-link setup by exchanging (Re)Association Request/Response frames on one of the links requested to be set up. For example, in option 260, the AP 1 and the STA 1 transmit an Authentication frame to each other, the STA 1 transmits a (Re)Association Request frame to the AP 1, and the AP 1 transmits a (Re)Association Response frame to the STA 1.

The Authentication frame is used for the AP to identify (determine the identity of) the STA and exchange information between the STA and the AP, and the (Re)Association Request/Response frame carries a Basic Multi-link element for multi-link setup. The non-AP MLD 220 indicates a plurality of links to be set up and capabilities and operation parameters thereof in the (Re)Association Request frame; the AP MLD 210 indicates links accepted for setup and links rejected for setup in the plurality of links requested to be set up, and the capabilities and operation parameters of the plurality of links requested to be set up in the (Re)Association Response frame.

For successful setup of the plurality of links, the AP MLD 210 allocates one association identifier (AID) to the non-AP MLD 220, and all affiliated STAs of the non-AP MLD 220 have a same AID, i.e., the AID allocated to the non-AP MLD 220 in the multi-link setup process. Subsequent to completing the multi-link setup between the non-AP MLD 220 and the AP MLD 210, the non-AP and the AP MLD 210 set up the plurality of links for the MLO; meanwhile, the non-AP MLD 220 is associated with the AP MLD 210, representing State 3 or State 4. The State 3 indicates an authenticated and associated state pending robust security network association (RSNA) authentication, and the State 4 represents an authenticated and associated state with the RSNA being set up or not required.

IEEE 802.11ad is the Wi-Fi communication standard that provides a multi-Gbps throughput using an unlicensed frequency band of a millimeter wave band; and IEEE 802.11ay is the Wi-Fi communication standard that provides a 100 Gb/s throughput by further using technologies such as MIMO, channel bonding, channel access optimization, and advanced beamforming training based on IEEE 802.11ad.

For a medium access control (MAC) technology for millimeter wave band communication, IEEE 802.11ay, similar to IEEE 802.11ad, organizes medium access within a beacon interval (BI). As illustrated in FIG. 3, FIG. 3 is a schematic diagram of a beacon interval according to a related art, and describes that a typical BI mainly consists of two access periods: a beacon header interval (BHI) and a data transmission interval (DTI).

The BHI includes at least one of a beacon transmission interval (BTI), association beamforming training (A-BFT), or an announcement transmission interval (ATI).

The DTI includes at least one of a service period (SP) or a contention-based access period (CBAP).

The BTI is used for an AP or a personal basic service set control point (PCP) to transmit a Beacon frame.

The A-BFT is used for an STA and an STA transmitting the Beacon frame during a previous BTI to perform beamforming training. The beamforming training is a bidirectional transmission process of Beamforming frames, through which necessary signals are provided to enable both communication entities to select sector beam directions suitable for signal transmission and reception. Upon successful completion of beamforming training, both communication entities may determine sector beam directions suitable for signal transmission and reception, such that antenna configurations are adjusted, and data is transmitted using beamforming.

The A-BFT is slotted and may include a plurality of A-BFT slots, one of which may be randomly selected by the STA to transmit a Sector Sweep (SSW) frame or a short SSW frame. In this case, a conflict may occur when two or more STAs select a same slot. To accommodate a greater number of STAs attempting to access during the A-BFT, each BI supports up to 40 A-BFT slots.

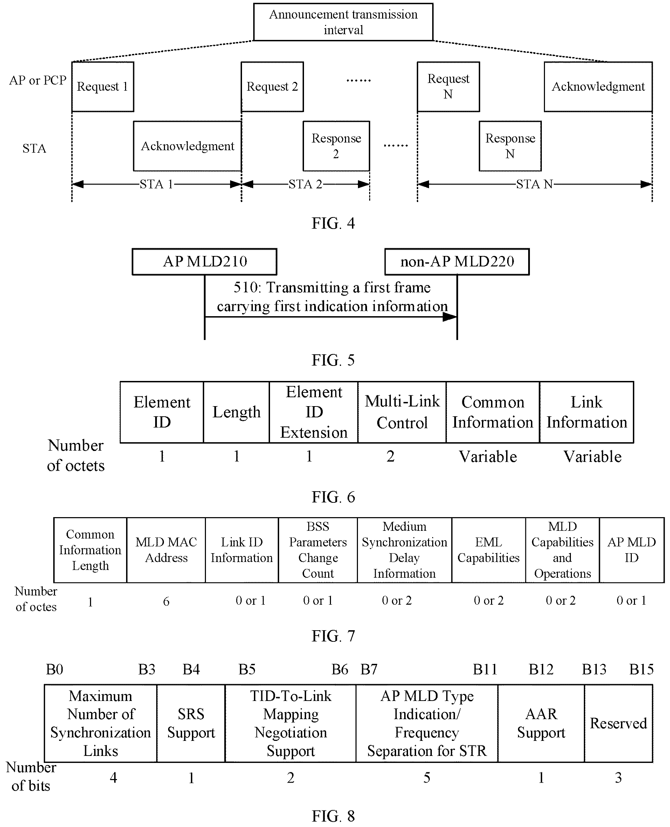

An announcement transmission interval (ATI) is used for an AP or a PCP to exchange frames with an STA that has completed beamforming training. As illustrated in FIG. 4, FIG. 4 is a schematic diagram of frame exchange during the ATI according to a related art. During the ATI, Request frames and Response frames are exchanged between the AP or PCP and any subset of STAs, and the AP or PCP initiates a sequence of all frame exchanges that occur during the ATI. For example, in STA 1, the AP or PCP transmits a Request 1 frame, and the STA transmits an Ack frame; in STA 2, the AP or PCP transmits a Request 2 frame, and the STA transmits a Response 2 frame; and in STA N, the AP or PCP transmits a Request N frame, the STA transmits a Response N frame, and the AP or PCP transmits an Ack frame.

After the ATI begins, the AP or PCP may immediately start the transmission of Request frames, or may delay the transmission of the Request frames in a case where a medium is determined to be busy using a clear channel assessment (CCA) mechanism.

The CCA mechanism means that in a wireless communication system, prior to transmitting data on a channel, a device first performs reception on the channel; in a case where no other device is detected transmitting data on the channel within a given time, the device starts the transmission; or in a case where another device is detected transmitting data, the device defers for a random period of time prior to retrying the process.

The DTI provides different types of medium access and beamforming training for data transmission. In the DTI, data frames are exchanged during contention-based access periods, or contention-free communications are performed during scheduled service periods.

Millimeter wave communication has problems of large signal attenuation, susceptibility to blockage, short coverage range, high cost of millimeter wave devices, and high power consumption of millimeter wave communication devices. Therefore, in a case where millimeter wave devices only use millimeter wave links, the problems in millimeter wave communication may not be solved. With standardization of the MLO technology in related communication protocols, multi-link communication that integrates a millimeter wave link with a low-frequency link may be considered based on the MLO architecture and technology. That is, in a device supporting millimeter wave communication, in addition to one link operating in the millimeter wave band, at least one link operates in the low-frequency band. The management and control functions are implemented in the low-frequency band link, and the millimeter wave link as a managed and controlled link is mainly used for transmitting high-throughput data. A frequency range of the low-frequency band is 450 MHz to 6000 MHz, and a frequency range of the millimeter wave band is 24250 MHz to 52600 MHz.

Therefore, problems that need to be addressed are how to classify multi-link communication devices supporting millimeter wave communication based on the MLO mode between the millimeter wave link and the low-frequency link, and how to release functions and capabilities based on the types of the multi-link communication devices supporting millimeter wave communication to facilitate discovery by non-AP MLDs.

FIG. 5 is a flowchart of a method for MLD communication according to some embodiments of the present disclosure. The method is performed by an AP MLD. The method includes the following process.

**In process 510,** the AP MLD transmits a first frame carrying first indication information.

The first indication information indicates whether the AP MLD supports at least one of an MLO type or mode based on a managing and controlling link and a managed and controlled link, supports the managed and controlled link, supports a millimeter wave link, or supports a corresponding operation mode. The managed and controlled link includes at least one of a low-frequency link or a millimeter wave link. The embodiments are exemplified by a managed and controlled link including a millimeter wave link.

In some embodiments, whether at least one of the MLO type or mode based on the managing and controlling link and the managed and controlled link, the managed and controlled link, the millimeter wave link, or the corresponding operation mode is supported refers to whether any one of the four, a combination of any two, a combination of any three, or a combination of all four is supported, which is not limited in the present disclosure.

In some embodiments, the operation mode corresponds to an MLO type or mode, the operation mode corresponds to a managed and controlled link, or the operation mode corresponds to a millimeter wave link.

In some embodiments, the managed-and-controlled-link-supported AP MLD includes a mmWave-supported AP MLD (mmW-S AP MLD). The mmW-S AP MLD includes at least two APs. Based on classification of operating frequency bands, the APs are classified into APs operating on the low-frequency link (e.g., a link below 7 GHz, i.e., a sub-7 GHz link) and APs operating on the millimeter wave link. Based on whether to operate on the managing and controlling link, the APs are classified into first APs and second APs. The first APs operate on the managing and controlling link, and the second APs operate on the managed and controlled link. The managing and controlling link usually includes one or more low-frequency links, and the managed and controlled link includes one or more millimeter wave links and/or one or more low-frequency links. The present disclosure is explained and illustrated by a managed and controlled link including both a millimeter wave link and a low-frequency link. Typically, the number of APs is in one-to-one correspondence with the number of links. In the present disclosure, a frequency range of the low-frequency band is 450 MHz to 6000 MHz, and a frequency range of the millimeter wave band is 24250 MHz to 52600 MHz.

In some embodiments, the mmW-S AP MLD designates one link as a managing and controlling link (also referred to as a managing link, a controlling link, a first link, or a primary link), and the remaining one or more links as managed and controlled links (also referred to as managed links, controlled links, second links, or secondary links). The managing and controlling link manages and controls communication of the managed and controlled links. The managing and controlling link is typically a low-frequency link, and the managed and controlled link is a millimeter wave link or a low-frequency link. The mmW-S AP MLD schedules and transmits at least one of the Beacon frame, the Probe Response frame, or a Group-Addressed Data frame on the managing and controlling link; and the millimeter wave link taken as the managed and controlled link is mainly used for data transmission. In some embodiments, the millimeter wave link supports transmitting at least one of the Beacon frame, the Probe frame, or the Group-Addressed Data frame.

In some embodiments, the method for MLD communication is also referred to as a method for MLD discovery, a method for MLD negotiation, a method for MLD capability interaction, or the like, which is not limited in the present disclosure.

In an example where the managed and controlled link is a millimeter wave link, in a case where the AP MLD supports the millimeter wave link, the operation mode corresponding to the millimeter wave link includes at least one of an MLO-only mode or a non-MLO-only mode.

With respect to (1) the MLO-only mode:
the MLO-only mode refers to a mode in which the managed and controlled link performs multi-link setup based on the managing and controlling link, and/or a mode in which the managing and controlling link manages and/or controls the managed and controlled link in all states or some states based on the MLO; and the managed and controlled link is set up based on the managing and controlling link, or the managed and controlled link is set up subsequent to the managing and controlling link, or a procedure for setting up the managed and controlled link is performed based on the managing and controlling link, or signaling for setting up the managed and controlled link is transmitted based on the managing and controlling link.

The MLO-only mode includes at least one of a first operation mode or a second operation mode.

### 1) First operation mode:

The first operation mode is a mode in which the managing and controlling link is in a mandatory enabled state, and the managing and controlling link manages and/or controls the managed and controlled link.

Description is given by an example where the managed and controlled link is a millimeter wave link. In the first operation mode, in the managing and controlling link and the millimeter wave link on which multi-link setup is completed based on the MLO-only AP MLD and the non-AP MLD, the managing and controlling link must be in a mandatory enabled state but cannot be in a disabled state, so as to establish the management and control for the millimeter wave link as the managed and controlled link. In addition, the millimeter wave link may be in an enabled state or a disabled state. Meanwhile, the managing and controlling link cannot be removed in a case where the millimeter wave link remains in the setup state.

In some embodiments, the first operation mode is referred to as an MLO-based mandatory enabled operation mode of the managing and controlling link, or a non-independent operation mode of the managed and controlled link, or a mandatory enabled operation mode of the managing and controlling link.

In some embodiments, in a case where the managed and controlled link is a millimeter wave link, the first operation mode is referred to as a millimeter wave link non-independent operation mode.

### 2) Second operation mode:

The second operation mode is a mode in which the managing and controlling link is in a non-mandatory enabled state, and the managing and controlling link manages the managed and controlled link and/or the managed and controlled link operates independently in a case where the managing and controlling link is in an enabled state, or the managed and controlled link operates independently in a case where the managing and controlling link is in a disabled state.

Description is given by an example where the managed and controlled link is a millimeter wave link. In the second operation mode, in the managing and controlling link and the millimeter wave link on which the multi-link setup is completed based on the MLO-only mmW-S AP MLD device and the non-AP MLD, the managing and controlling link is in a non-mandatory enabled state, that is, the managing and controlling link is allowed to be in an enabled state or a disabled state.

In a case where the managing and controlling link is in an enabled state, the managing and controlling link establishes management and/or control for the millimeter wave link as the managed and controlled link, and the millimeter wave link depends on the managing and controlling link. In addition, the millimeter wave link may independently perform at least one of management, control, or data communication for itself.

In a case where the managing and controlling link is in a disabled state, the millimeter wave link may independently perform at least one of management, control, or data communication for itself.

In some embodiments, in the second operation mode, the managing and controlling link is allowed to be removed in a case where the millimeter wave link remains in the setup state.

In some embodiments, the second operation mode is referred to as an MLO-based non-mandatory enabled operation mode of the managing and controlling link, or a semi-independent operation mode of the managed and controlled link, or a non-mandatory enabled operation mode of the managing and controlling link.

In some embodiments, in a case where the managed and controlled link is a millimeter wave link, the second operation mode is referred to as a millimeter wave link semi-independent operation mode.

In some embodiments, the managed and controlled link, when operating in an MLO-based independent operation mode (i.e., a managed and controlled link semi-independent operation mode), is used for transmitting at least one of the following management frames: a type 3 management frame in which the Beacon frame is individually addressed, an individually addressed Deauthentication frame, an individually addressed Disassociation frame, or an individually addressed multi-link probe request.

In some embodiments, the managed and controlled link, when operating in an MLO-based controlled operation mode (i.e., a managed and controlled link non-independent operation mode), is not used for transmitting at least one of the following management frames: a type 3 management frame in which the Beacon frame is individually addressed, an individually addressed Deauthentication frame, an individually addressed Disassociation frame, or an individually addressed multi-link probe request.

### With respect to (2) the non-MLO-only mode:

The non-MLO-only mode is a mode in which the managed and controlled link operates independently, a mode in which the managed and controlled link is allowed to operate independently, or a mode in which the managed and controlled link is allowed to operate completely independently.

Description is given by an example where the managed and controlled link is a millimeter wave link. In a case where the non-MLO-only mode is used, when an STA needs to set up a link with the mmW-S AP MLD on the millimeter wave link, multi-link setup may be simultaneously completed on the managing and controlling link and the millimeter wave link; or a link may be independently set up on the millimeter wave link, that is, association of the STA with an AP corresponding to the millimeter wave link affiliated to the mmW-S AP MLD is completed on the millimeter wave link.

In some embodiments, the non-MLO-only mode is referred to as a non operation-only mode of multiple links, an independent operation mode of the managed and controlled link, or a third operation mode.

In some embodiments, in a case where the managed and controlled link is a millimeter wave link, the third operation mode is referred to as an independent operation mode of the millimeter wave link.

In some embodiments, the managing and controlling link includes a low-frequency link, and the managed and controlled link includes at least one of a low-frequency link or a millimeter wave link. The managing and controlling link is also referred to as a managing link, a controlling link, a first link, or the like. The managed and controlled link is also referred to as a managed link, a controlled link, a second link, or the like.

It should be noted that, in a case where independent operation is performed, the managed and controlled link does not receive management and/or control from the managing and controlling link.

In some embodiments, the AP MLD carries a Basic Multi-link element in a transmitted Beacon frame, a Probe Response frame, an Association Response frame, or another management frame. The AP MLD may transmit a Beacon frame, a Probe Response frame, an Association Response frame, or another management frame on the managing and controlling link. The first indication information is carried in an AP MLD Type Indication subfield in an MLD Capabilities and Operations subfield of a Common Information field (Common Info field) in a Basic Multi-link element.

FIG. 6 is a schematic diagram of a format of a Basic Multi-link element according to some embodiments of the present disclosure. The Basic Multi-link element includes, in sequence: an Element Identifier (Element ID) field, a Length field, an Element ID Extension field, a Multi-Link Control field, a Common Info field, and a Link Info field. In the embodiments, the meaning of a subfield is the same as that of a field.

The Element ID field occupies one octet, the Length field occupies one octet, the Element ID Extension field occupies one octet, the Multi-Link Control field occupies two octets, the number of octets occupied by the Common Info field is variable, and the number of octets occupied by the Link Info field is variable.

With respect to the Common Info field with a variable number of octets described above, FIG. 7 is a schematic diagram of a format of a Common Info field according to some embodiments of the present disclosure. The Common Info field includes, in sequence: a Common Info Length field, an MLD MAC Address field, a Link ID Info field, a Basic Service Set (BSS) Parameters Change Count field, a Medium Synchronization Delay Information field, an Enhanced Multi-Link (EML) Capabilities field, an MLD Capabilities and Operations field, and an AP MLD ID field.

The Common Info Length field occupies one octet, the MLD MAC Address field occupies six octets, the Link ID Info field occupies zero or one octet, the BSS Parameters Change Count field occupies zero or one octet, the Medium Synchronization Delay Information field occupies zero or two octets, the EML Capabilities field occupies zero or two octets, the MLD Capabilities and Operations field occupies zero or two octets, and the AP MLD ID field occupies zero or one octet.

With respect to the MLD Capabilities and Operations field described above, FIG. 8 is a schematic diagram of a format of an MLD Capabilities and Operations field according to some embodiments of the present disclosure. The MLD Capabilities and Operations field includes, in sequence: a Maximum Number of Simultaneous Links field, a Sounding Reference Signal (SRS) Support field, a Traffic Identifier (TID)-to-Link Mapping Negotiation Support field, an AP MLD Type Indication/Frequency Separation for Simultaneous Transmit and Receive (STR) field, an Application Aware Routing (AAR) Support field, and a Reserved field.

The Maximum Number of Simultaneous Links field occupies four bits (B0 to B3), the SRS Support field occupies one bit (B4), the TID-To-Link Mapping Negotiation Support field occupies two bits (B5 to B6), the AP MLD Type Indication/Frequency Separation for STR field occupies five bits (B7 to B11), the AAR Support field occupies one bit (B12), and the Reserved field occupies three bits (B13 to B15).

A plurality of implementations of the first indication information described above are provided, and some of them are illustrated hereinafter (in no particular order).

### Implementation 1:

In some embodiments, the first indication information includes a first bit.

The first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or

the first bit indicates that the AP MLD supports the managed and controlled link in a case where the first bit takes a first value; or the first bit indicates that the AP MLD does not support the managed and controlled link in a case where the first bit takes a second value; or

the first bit indicates that the AP MLD supports the millimeter wave link in a case where the first bit takes a first value; or the first bit indicates that the AP MLD does not support the millimeter wave link in a case where the first bit takes a second value.

In some embodiments, in a case where it is necessary to simultaneously indicate whether the AP MLD supports the MLO type or mode based on the managing and controlling link and the managed and controlled link and whether the AP MLD supports the managed and controlled link, the first bit may be set to indicate whether the AP MLD supports the MLO type or mode based on the managing and controlling link and the managed and controlled link, and a sixth bit may be set to indicate whether the AP MLD supports the managed and controlled link.

The sixth bit may be set to indicate whether the AP MLD supports the MLO type or mode based on the managing and controlling link and the managed and controlled link, and the first bit indicates whether the AP MLD supports the managed and controlled link.

In some embodiments, in a case where it is necessary to simultaneously indicate whether the AP MLD supports the MLO type or mode based on the managing and controlling link and the managed and controlled link and whether the AP MLD supports the millimeter wave link, the first bit may be set to indicate whether the AP MLD supports the MLO type or mode based on the managing and controlling link and the managed and controlled link, and a seventh bit may be set to indicate whether the AP MLD supports the millimeter wave link.

The seventh bit may be set to indicate whether the AP MLD supports the MLO type or mode based on the managing and controlling link and the managed and controlled link, and the first bit indicates whether the AP MLD supports the millimeter wave link.

In some embodiments, description is given by an example where the managed and controlled link is a millimeter wave link and the first bit indicates whether the AP MLD supports the managed and controlled link. The first bit is B8 in the AP MLD Type Indication/Frequency Separation for STR field illustrated in FIG. 8, the first value is 1, and the second value is 0.

In a case where B8 is 1, the AP MLD supports a millimeter wave link. In a case where B8 is 0, the AP MLD does not support a millimeter wave link.

Alternatively, the first bit is B8 in the AP MLD Type Indication/Frequency Separation for STR field illustrated in FIG. 8, the first value is 0, and the second value is 1.

In a case where B8 is 0, the AP MLD supports a millimeter wave link. In a case where B8 is 1, the AP MLD does not support a millimeter wave link.

In some embodiments, the first indication information includes a second bit.

The second bit indicates an AP MLD type operating in the MLO-only mode in a case where the second bit takes a third value; or the second bit indicates an AP MLD type operating in the non-MLO-only mode in a case where the second bit takes a fourth value.

In some embodiments, the first indication information includes a second bit.

The second bit indicates an mmW-S AP MLD type operating in the MLO-only mode in a case where the second bit takes the third value and the managed and controlled link is the millimeter wave link; or the second bit indicates an mmW-S AP MLD type operating in the non-MLO-only mode in a case where the second bit takes the fourth value and the managed and controlled link is the millimeter wave link.

In some embodiments, description is given by an example where the managed and controlled link is a millimeter wave link. The AP MLD type operating in the MLO-only mode is the mmW-S AP MLD type operating in the MLO-only mode, the second bit is B9 in the AP MLD Type Indication/Frequency Separation for STR field illustrated in FIG. 8, the third value is 1, and the fourth value is 0.

In a case where B9 is 1, the mmW-S AP MLD type operating in the MLO-only mode is indicated. In a case where B9 is 0, the mmW-S AP MLD type operating in the non-MLO-only mode is indicated.

In a case where B8 is the second value, B9 is reserved, that is, in a case where B8 is the first value, B9 takes effect.

Alternatively, the second bit is B9 in the AP MLD Type Indication/Frequency Separation for STR field illustrated in FIG. 8, the third value is 0, and the fourth value is 1.

In a case where B9 is 0, the mmW-S AP MLD type operating in the MLO-only mode is indicated. In a case where B9 is 1, the mmW-S AP MLD type operating in the non-MLO-only mode is indicated.

In a case where B8 is the second value, B9 is reserved, that is, in a case where B8 is the first value, B9 takes effect.

In some embodiments, the first indication information includes a third bit.

The third bit indicates an AP MLD sub-type operating in the first operation mode in a case where the third bit takes a fifth value; or the third bit indicates an AP MLD sub-type operating in the second operation mode in a case where the third bit takes a sixth value.

In some embodiments, the first indication information includes a third bit.

The third bit indicates an mmW-S AP MLD sub-type operating in the first operation mode in a case where the third bit takes the fifth value and the managed and controlled link is the millimeter wave link; or the third bit indicates an mmW-S AP MLD sub-type operating in the second operation mode in a case where the third bit takes the sixth value and the managed and controlled link is the millimeter wave link.

In some embodiments, description is given by an example where the managed and controlled link is a millimeter wave link. The AP MLD sub-type operating in the first operation mode is the mmW-S AP MLD sub-type operating in the first operation mode, the AP MLD sub-type operating in the second operation mode is the mmW-S AP MLD sub-type operating in the second operation mode, the third bit is B10 in the AP MLD Type Indication/Frequency Separation for STR field illustrated in FIG. 8, the fifth value is 1, and the sixth value is 0.

In a case where B10 is 1, the mmW-S AP MLD sub-type operating on the MLO-based mandatory enabled operation mode of the managing and controlling link (i.e., the first operation mode) is indicated. In a case where B10 is 0, the mmW-S AP MLD sub-type operating on the MLO-based non-mandatory enabled operation mode of the managing and controlling link (i.e., the second operation mode) is indicated.

In a case where B8 is the first value and B9 is the fourth value, B10 is reserved, that is, in a case where B8 is the first value and B9 is the third value, B10 takes effect.

Alternatively, the third bit is B10 in the AP MLD Type Indication/Frequency Separation for STR field illustrated in FIG. 8, the fifth value is 0, and the sixth value is 1.

In a case where B10 is 0, the mmW-S AP MLD sub-type operating on the MLO-based mandatory enabled operation mode of the managing and controlling link (i.e., the first operation mode) is indicated. In a case where B10 is 1, the mmW-S AP MLD sub-type operating on the MLO-based non-mandatory enabled operation mode of the managing and controlling link (i.e., the second operation mode) is indicated.

In a case where B8 is the first value and B9 is the fourth value, B10 is reserved, that is, in a case where B8 is the first value and B9 is the third value, B10 takes effect.

### Implementation 2:

In some embodiments, the first indication information includes a fourth bit.

The fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

In some embodiments, the first indication information includes a fourth bit.

The fourth bit indicates that the AP MLD is not an MLO-only mmW-S AP MLD in a case where the fourth bit takes the seventh value and the managed and controlled link is the millimeter wave link; or the fourth bit indicates that the AP MLD is the MLO-only mmW-S AP MLD in a case where the fourth bit takes the eighth value and the managed and controlled link is the millimeter wave link.

In some embodiments, description is given by an example where the managed and controlled link is a millimeter wave link. The MLO-only AP MLD is the MLO-only mmW-S AP MLD, the fourth bit is B8 in the AP MLD Type Indication/Frequency Separation for STR field illustrated in FIG. 8, the seventh value is 0, and the eighth value is 1.

In a case where B8 is 0, the AP MLD is not an MLO-only mmW-S AP MLD. In a case where B8 is 1, the AP MLD is an MLO-only mmW-S AP MLD.

Alternatively, the fourth bit is B8 in the AP MLD Type Indication/Frequency Separation for STR field illustrated in FIG. 8, the seventh value is 1, and the eighth value is 0.

In a case where B8 is 1, the AP MLD is not an MLO-only mmW-S AP MLD. In a case where B8 is 0, the AP MLD is an MLO-only mmW-S AP MLD.

In some embodiments, the first indication information includes a fifth bit.

The fifth bit indicates an AP MLD type operating in the first operation mode in a case where the fifth bit takes a ninth value; or the fifth bit indicates an AP MLD type operating in the second operation mode in a case where the fifth bit takes a tenth value.

In some embodiments, the first indication information includes a fifth bit.

The fifth bit indicates an mmW-S AP MLD type operating in the first operation mode in a case where the fifth bit takes the ninth value and the managed and controlled link is the millimeter wave link; or the fifth bit indicates an mmW-S AP MLD type operating in the second operation mode in a case where the fifth bit takes the tenth value and the managed and controlled link is the millimeter wave link.

In some embodiments, description is given by an example where the managed and controlled link is a millimeter wave link. The AP MLD type operating in the first operation mode is the mmW-S AP MLD type operating in the first operation mode, the AP MLD type operating in the second operation mode is the mmW-S AP MLD type operating in the second operation mode, the fifth bit is B9 in the AP MLD Type Indication/Frequency Separation for STR field illustrated in FIG. 8, the ninth value is 1, and the tenth value is 0.

In a case where B9 is 1, the mmW-S AP MLD type operating in the first operation mode is indicated. In a case where B9 is 0, the mmW-S AP MLD type operating in the second operation mode is indicated.

In a case where B8 is the seventh value, B9 is reserved, that is, in a case where B8 is the eighth value, B9 takes effect.

Alternatively, the second bit is B9 in the AP MLD Type Indication/Frequency Separation for STR field illustrated in FIG. 8, the ninth value is 0, and the tenth value is 1.

In a case where B9 is 0, the mmW-S AP MLD type operating in the first operation mode is indicated. In a case where B9 is 1, the mmW-S AP MLD type operating in the second operation mode is indicated.

In a case where B8 is the seventh value, B9 is reserved, that is, in a case where B8 is the eighth value, B9 takes effect.

### Implementation 3:

In some embodiments, the first indication information includes an indication field (or an indication bit sequence, which is not a separate field) including two bits (such as B8 and B9 described above).

In a case where the indication field takes a value of a first codepoint, an AP MLD type operating in the first operation mode is indicated. In a case where the indication field takes a value of a second codepoint, an AP MLD type operating in the second operation mode is indicated. In a case where the indication field takes a value of a third codepoint, an AP MLD type operating in the non-MLO-only mode is indicated.

In some embodiments, the first indication information includes an indication field (or an indication bit sequence, which is not a separate field) including two bits (such as B8 and B9 described above).

In a case where the indication field takes the value of the first codepoint and the managed and controlled link is the millimeter wave link, an mmW-S AP MLD type operating in the first operation mode is indicated. In a case where the indication field takes the value of the second codepoint and the managed and controlled link is the millimeter wave link, an mmW-S AP MLD type operating in the second operation mode is indicated. In a case where the indication field takes the value of the third codepoint and the managed and controlled link is the millimeter wave link, an mmW-S AP MLD type operating in the non-MLO-only mode is indicated.

In some embodiments, description is given by an example where the managed and controlled link is a millimeter wave link. The AP MLD type operating in the first operation mode is the mmW-S AP MLD type operating in the first operation mode, the AP MLD type operating in the second operation mode is the mmW-S AP MLD type operating in the second operation mode, and the AP MLD type operating in the non-MLO-only mode is the mmW-S AP MLD type operating in the non-MLO-only mode.

The indication field may take values of a first codepoint 11, a second codepoint 10, and a third codepoint 01.

In a case where the indication field is 11, the mmW-S AP MLD type operating in the first operation mode is indicated. In a case where the indication field takes a value of 10, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 11, a second codepoint 10, and a third codepoint 00.

In a case where the indication field takes a value of 11, the mmW-S AP MLD type operating in the first operation mode is indicated. In a case where the indication field takes a value of 10, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 11, a second codepoint 00, and a third codepoint 01.

In a case where the indication field takes a value of 11, the mmW-S AP MLD type operating in the first operation mode is indicated. In a case where the indication field takes a value of 00, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 11, a second codepoint 00, and a third codepoint 10.

In a case where the indication field takes a value of 11, the mmW-S AP MLD type operating in the first operation mode is indicated. In a case where the indication field takes a value of 00, the mmW-S AP MLD type operating in the second operation mode is indicated. In a case where the indication field takes a value of 10, the mmW-S AP MLD type operating in the non-MLO-only mode is indicated.

Alternatively, the indication field may take values of a first codepoint 11, a second codepoint 01, and a third codepoint 10.

In a case where the indication field takes a value of 11, the mmW-S AP MLD type operating in the first operation mode is indicated. In a case where the indication field takes a value of 01, the mmW-S AP MLD type operating in the second operation mode is indicated. In a case where the indication field takes a value of 10, the mmW-S AP MLD type operating in the non-MLO-only mode is indicated.

Alternatively, the indication field may take values of a first codepoint 11, a second codepoint 01, and a third codepoint 00.

In a case where the indication field takes a value of 11, the mmW-S AP MLD type operating in the first operation mode is indicated. In a case where the indication field takes a value of 01, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 10, a second codepoint 11, and a third codepoint 00.

In a case where the indication field takes a value of 10, the mmW-S AP MLD type operating in the first operation mode is indicated. In a case where the indication field takes a value of 11, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 10, a second codepoint 11, and a third codepoint 01.

In a case where the indication field takes a value of 10, the mmW-S AP MLD type operating in the first operation mode is indicated. In a case where the indication field takes a value of 11, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 10, a second codepoint 01, and a third codepoint 00.

In a case where the indication field takes a value of 10, the mmW-S AP MLD type operating in the first operation mode is indicated. In a case where the indication field takes a value of 01, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 10, a second codepoint 01, and a third codepoint 11.

In a case where the indication field takes a value of 10, the mmW-S AP MLD type operating in the first operation mode is indicated. In a case where the indication field takes a value of 01, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 10, a second codepoint 00, and a third codepoint 11.

In a case where the indication field takes a value of 10, the mmW-S AP MLD type operating in the first operation mode is indicated. In a case where the indication field takes a value of 00, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 10, a second codepoint 00, and a third codepoint 01.

In a case where the indication field takes a value of 10, the mmW-S AP MLD type operating in the first operation mode is indicated. In a case where the indication field takes a value of 00, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 01, a second codepoint 11, and a third codepoint 10.

In a case where the indication field takes a value of 01, the mmW-S AP MLD type operating in the first operation mode is indicated. In a case where the indication field takes a value of 11, the mmW-S AP MLD type operating in the second operation mode is indicated. In a case where the indication field takes a value of 10, the mmW-S AP MLD type operating in the non-MLO-only mode is indicated.

Alternatively, the indication field may take values of a first codepoint 01, a second codepoint 11, and a third codepoint 00.

In a case where the indication field takes a value of 01, the mmW-S AP MLD type operating in the first operation mode is indicated. In a case where the indication field takes a value of 11, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 01, a second codepoint 10, and a third codepoint 11.

In a case where the indication field takes a value of 01, the mmW-S AP MLD type operating in the first operation mode is indicated. In a case where the indication field takes a value of 10, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 01, a second codepoint 10, and a third codepoint 00.

In a case where the indication field takes a value of 01, the mmW-S AP MLD type operating in the first operation mode is indicated. In a case where the value of the indication field takes a value of 10, the mmW-S AP MLD type operating in the second operation mode is indicated. In a case where the indication field takes a value of 00, the mmW-S AP MLD type operating in the non-MLO-only mode is indicated.

Alternatively, the indication field may take values of a first codepoint 01, a second codepoint 00, and a third codepoint 11.

In a case where the indication field takes a value of 01, the mmW-S AP MLD type operating in the first operation mode is indicated. In a case where the indication field takes a value of 00, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 01, a second codepoint 00, and a third codepoint 10.

In a case where the indication field takes a value of 01, the mmW-S AP MLD type operating in the first operation mode is indicated. In a case where the indication field takes a value of 00, the mmW-S AP MLD type operating in the second operation mode is indicated. In a case where the indication field takes a value of 10, the mmW-S AP MLD type operating in the non-MLO-only mode is indicated.

Alternatively, the indication field may take values of a first codepoint 00, a second codepoint 11, and a third codepoint 10.

In a case where the indication field takes a value of 00, the mmW-S AP MLD type operating in the first operation mode is indicated. In a case where the indication field takes a value of 11, the mmW-S AP MLD type operating in the second operation mode is indicated. In a case where the indication field takes a value of 10, the mmW-S AP MLD type operating in the non-MLO-only mode is indicated.

Alternatively, the indication field may take values of a first codepoint 00, a second codepoint 11, and a third codepoint 01.

In a case where the indication field takes a value of 00, the mmW-S AP MLD type operating in the first operation mode is indicated. In a case where the indication field takes a value of 11, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 00, a second codepoint 10, and a third codepoint 01.

In a case where the indication field takes a value of 00, the mmW-S AP MLD type operating in the first operation mode is indicated. In a case where the indication field takes a value of 10, the mmW-S AP MLD type operating in the second operation mode is indicated. In a case where the indication field takes a value of 01, the mmW-S AP MLD type operating in the non-MLO-only mode is indicated.

Alternatively, the indication field may take values of a first codepoint 00, a second codepoint 10, and a third codepoint 11.

In a case where the indication field takes a value of 00, the mmW-S AP MLD type operating in the first operation mode is indicated. In a case where the indication field takes a value of 10, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 00, a second codepoint 01, and a third codepoint 11.

In a case where the indication field takes a value of 00, the mmW-S AP MLD type operating in the first operation mode is indicated. In a case where the indication field takes a value of 01, the mmW-S AP MLD type operating in the second operation mode is indicated. In a case where the indication field takes a value of 11, the mmW-S AP MLD type operating in the non-MLO-only mode is indicated.

Alternatively, the indication field may take values of a first codepoint 00, a second codepoint 01, and a third codepoint 10.

In a case where the indication field takes a value of 00, the mmW-S AP MLD type operating in the first operation mode is indicated. In a case where the indication field takes a value of 01, the mmW-S AP MLD type operating in the second operation mode is indicated. In a case where the indication field takes a value of 10, the mmW-S AP MLD type operating in the non-MLO-only mode is indicated.

With respect to the mmW-S AP MLD operating in the MLO-only mode (MLO-only mmW-S AP MLD), in a case where an STA device needs to set up a link with the MLO-only mmW-S AP MLD on the millimeter wave link, the STA device needs to first set up a link to the MLO-only mmW-S AP MLD on a managing and controlling link and then set up a link on the millimeter wave link, or complete multi-link setup on the managing and controlling link and the millimeter wave link simultaneously.

When the non-AP MLD intends to perform a multi-link setup with the MLO-only mmW-S AP MLD on the managing and controlling link and one or more managed and controlled links including the millimeter wave link specified by the MLO-only mmW-S AP MLD, frame exchange is performed on the managing and controlling link during procedures of authentication, association or reassociation, and 4-way handshake.

In some embodiments, the first frame includes at least one of a Beacon frame, an Association Response frame, a Probe Response frame, or another management frame other than the Beacon frame, the Association Response frame, and the Probe Response frame.

The Beacon frame carries information such as capability information, SSID, and supported rates. The Association Response frame is used for the AP to respond to the STA's approval for association. The Probe Response frame is used for the AP to respond to a broadcast request of the STA, and content of the Probe Response frame is substantially the same as that of the Beacon frame.

In some embodiments, the AP MLD includes a first AP operating on the managing and controlling link. The AP MLD transmitting the first frame carrying the first indication information described above includes: the first AP transmitting the first frame carrying the first indication information. The first indication information indicates at least one of: whether an AP MLD supports a managed and controlled link, or a corresponding operation mode in a case where the managed and controlled link is supported.

In some embodiments, the first AP transmits the first frame carrying the first indication information on the managing and controlling link. The first indication information indicates at least one of: whether the AP MLD supports the managed and controlled link, or a corresponding operation mode in a case where the managed and controlled link is supported.

In summary, in the method according to the embodiments, the first frame carrying the first indication information is transmitted, wherein the first indication information indicates at least one of: whether the AP MLD supports the managed and controlled link, or a corresponding operation mode in a case where the managed and controlled link is supported, such that in a case where the managed and controlled link is supported, communication can be achieved between the AP and the STA based on the supported operation mode.

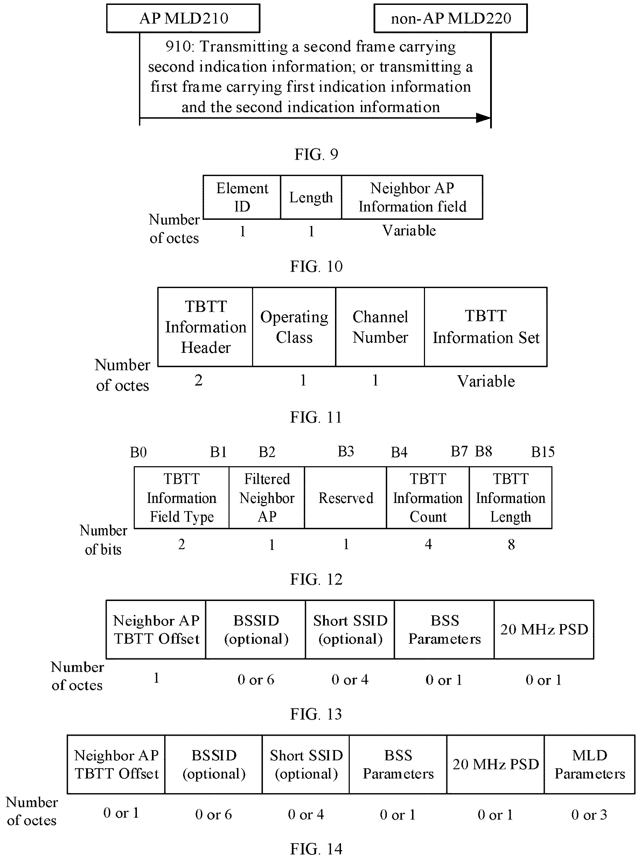

FIG. 9 is a flowchart of a method for MLD communication according to some embodiments of the present disclosure. The method is applicable to an AP MLD, wherein the AP MLD includes a first AP and a second AP. The method includes the following process.

**In process 910,** the AP MLD transmits a second frame carrying second indication information; or transmits the first frame carrying the first indication information and the second indication information.

The second frame carrying the second indication information is transmitted, wherein the second indication information indicates an operating parameter of a second AP. The operating parameter of the second AP includes at least one of: whether the second AP operates on an MLO-based managed and controlled link in an affiliated AP MLD; or whether an MLO-based managed and controlled link on which the second AP is located in an affiliated AP MLD supports independent operation.

The managed and controlled link includes at least one of a low-frequency link and a millimeter wave link, and the independent operation may be an independent operation in the second operation mode or an independent operation in the non-MLO-only mode.

A plurality of implementations of the second indication information described above are provided, and some of them are illustrated hereinafter (in no particular order).

### Implementation 1:

In some embodiments, in an MLD Parameters subfield in a TBTT Information field in a Neighbor AP Information field in a Reduced Neighbor Report element, content for defining the MLO-only mmWave Link Indication subfield and the MLO-only mmWave Link Independent Operation Support subfield is added, and support for the millimeter wave link functionality and capability parameter indication is added.

The Reduced Neighbor Report element carries channels and other information related to neighbor APs and includes one or more Neighbor AP Information fields. FIG. 10 is a schematic diagram of a format of a Reduced Neighbor Report element according to some embodiments of the present disclosure. The Reduced Neighbor Report element includes, in sequence: an Element ID field, a Length field, and a Neighbor AP Information field field. In the embodiments, the meaning of a subfield is the same as that of a field.

The Element ID field occupies one octet, the Length field occupies one octet, and the numbers of octets occupied by the Neighbor AP Information field field are variable.

The Neighbor AP Information field is used to define TBTT and other information of a group of neighbor APs located on a channel and includes a TBTT Information Header subfield, a TBTT Information Set field, and the like. The TBTT Information Header subfield includes a TBTT Information Field Type subfield and a TBTT Information Length subfield. The TBTT Information Field Type subfield and the TBTT Information Length subfield together identify the format of the TBTT Information field. The TBTT Information Set field includes one or more TBTT Information fields. The TBTT Information Length subfield indicates a length of each TBTT Information field included in the TBTT Information Set field.

FIG. 11 is a schematic diagram of a format of a Neighbor AP Information field according to some embodiments of the present disclosure. The Neighbor AP Information field includes, in sequence: a TBTT Information Header field, an Operating Class field, a Channel Number field, and a TBTT Information Set field.

The TBTT Information Header field occupies two octets, the Operating Class field occupies one octet, the Channel Number field occupies one octet, and the number of octets occupied by the TBTT Information Set field is variable.

With respect to the TBTT Information Header field, FIG. 12 is a schematic diagram of a format of a TBTT Information Header field according to some embodiments of the present disclosure. The TBTT Information Header field includes, in sequence: a TBTT Information Field Type field, a Filtered Neighbor AP field, a Reserved field, a TBTT Information Count field, and a TBTT Information Length field.

The TBTT Information Field Type field occupies two bits (B0 to B1), the Filtered Neighbor AP field occupies one bit (B2), the Reserved field occupies one bit (B3), the TBTT Information Count field occupies four bits (B4 to B7), and the TBTT Information Length field occupies eight bits (B8 to B15).

FIG. 13 is a schematic diagram of a format of a TBTT Information field according to some embodiments of the present disclosure. The TBTT Information field includes, in sequence: a Neighbor AP TBTT Offset field, a Basic Service Set Identifier (BSSID) field, a Short SSID field, a BSS Parameters field, and a 20 MHz Power Spectral Density (PSD) field.

The BSSID field and the Short SSID field are optional fields, the Neighbor AP TBTT Offset field occupies one octet, the BSSID field occupies zero or six octets, the Short SSID field occupies zero or four octets, the BSS Parameters field occupies zero or one octet, and the 20 MHz PSD field occupies zero or one octet.

In a case where the TBTT Information Field Type subfield is set to 0, contents of the TBTT Information field are illustrated in Table 1 in combination with the TBTT Information Length subfield. The relevant specification specifies that the value of the TBTT Information Field Type subfield is set to 0 or 1, while the values 2 and 3 are reserved.

**Table 1**

| Values of TBTT Information Length subfield | Contents of TBTT Information field |
|---|---|
| 1 | A Neighbor AP TBTT Offset subfield |
| 2 | A Neighbor AP TBTT Offset subfield and a BSS Parameters subfield |
| 5 | A Neighbor AP TBTT Offset subfield and a Short SSID subfield |
| 6 | A Neighbor AP TBTT Offset subfield, a Short SSID subfield, and a BSS Parameters subfield |
| 7 | A Neighbor AP TBTT Offset subfield and a BSSID subfield |
| 8 | A Neighbor AP TBTT Offset subfield, a BSSID subfield, and a BSS Parameters subfield |
| 9 | A Neighbor AP TBTT Offset subfield, a BSSID subfield, a BSS Parameters subfield, and a 20 MHz PSD subfield |
| 11 | A Neighbor AP TBTT Offset subfield, a BSSID subfield, and a Short SSID subfield |
| 12 | A Neighbor AP TBTT Offset subfield, a BSSID subfield, a Short SSID subfield, and a BSS Parameters subfield |
| 0,3,4,10,14,15 | Reserved |
| 13 | A Neighbor AP TBTT Offset subfield, a BSSID subfield, a Short SSID subfield, a BSS Parameters subfield, and a 20 MHz PSD subfield |
| 16 | A Neighbor AP TBTT Offset subfield, a BSSID subfield, a Short SSID subfield, a BSS Parameters subfield, a 20 MHz PSD subfield, and an MLD Parameters subfield |
| 17-255 | The first 16 octets of the Information field include a Neighbor AP TBTT Offset subfield, a BSSID subfield, a Short SSID subfield, a BSS Parameters subfield, a 20 MHz PSD subfield, and an MLD Parameters subfield, and the remaining octets are reserved. |

FIG. 14 is a schematic diagram of a format of a TBTT Information field according to some embodiments of the present disclosure. The TBTT Information field includes, in sequence: a Neighbor AP TBTT Offset field, a BSSID field, a Short SSID field, a BSS Parameters field, a 20 MHz PSD field, and an MLD Parameters field.

The BSSID field and the Short SSID field are optional fields, the Neighbor AP TBTT Offset field occupies zero or one octet, the BSSID field occupies zero or six octets, the Short SSID field occupies zero or four octets, the BSS Parameters field occupies zero or one octet, the 20 MHz PSD field occupies zero or one octet, and the MLD Parameters field occupies zero or three octets.

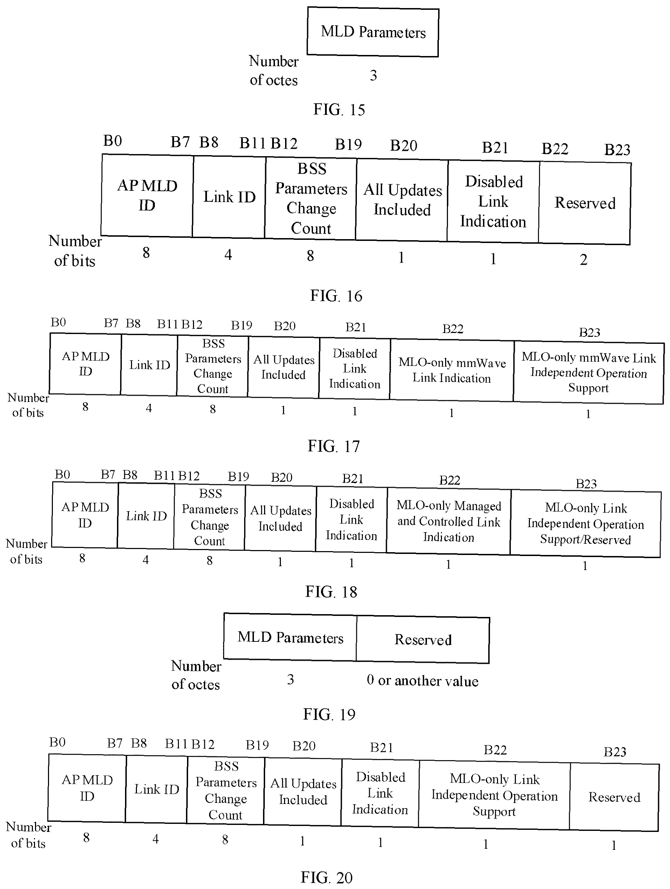

In a case where the TBTT Information Field Type subfield is 1 and the TBTT Information Length subfield is 3, the TBTT Information field includes the MLD Parameters subfield; and in a case where the value of the TBTT Information Length subfield is greater than 3, the first three octets of the TBTT Information field include the MLD Parameters subfield. The relevant specification specifies that the TBTT Information Field Type subfield is 1 and the format of the TBTT Information field of a reported AP operating on the managed and controlled link is identified in combination with the TBTT Information Length subfield. In some embodiments, FIG. 15 is a schematic diagram of a format of a TBTT Information field according to some embodiments of the present disclosure. The TBTT Information field includes an MLD Parameters field, wherein the MLD Parameters field occupies three octets.

FIG. 16 is a schematic diagram of a format of an MLD Parameters subfield according to some embodiments of the present disclosure. The MLD Parameters subfield includes, in sequence: an AP MLD ID field, a Link ID field, a BSS Parameters Change Count field, an All Updates Included field, a Disabled Link Indication field, and a Reserved field.

The AP MLD ID field occupies eight bits (B0 to B7), the Link ID field occupies four bits (B8 to B11), the BSS Parameters Change Count field occupies eight bits (B12 to B19), the All Updates Included field occupies one bit (B20), the Disabled Link Indication field occupies one bit (B21), and the Reserved field occupies two bits (B23 to B23).

In some embodiments, the second indication information includes a first field, wherein the first field indicates whether the second AP operates on an MLO-only millimeter wave link or a millimeter wave link in an affiliated AP MLD.

The first field indicates that the second AP operates on the MLO-only millimeter wave link or the millimeter wave link in the affiliated AP MLD in a case where the first field takes an eleventh value; or the first field indicates that the second AP does not operate on the MLO-only millimeter wave link or the millimeter wave link in the affiliated AP MLD in a case where the first field takes a twelfth value.

In some embodiments, the first field is an MLO-only mmWave Link Indication subfield, the eleventh value is 1, and the twelfth value is 0.

In a case where the value of the MLO-only mmWave Link Indication subfield is 1, the second AP operates on the MLO-only millimeter wave link or the millimeter wave link in the affiliated AP MLD. In a case where the value of the MLO-only mmWave Link Indication subfield is 0, the second AP does not operate on the MLO-only millimeter wave link or the millimeter wave link in the affiliated AP MLD.

Alternatively, the first field is an MLO-only mmWave Link Indication subfield, the eleventh value is 0, and the twelfth value is 1.

In a case where the value of the MLO-only mmWave Link Indication subfield is 0, the second AP ioperates on the MLO-only millimeter wave link or the millimeter wave link in the affiliated AP MLD. In a case where the value of the MLO-only mmWave Link Indication subfield is 1, the second AP does not operate on the MLO-only millimeter wave link or the millimeter wave link in the affiliated AP MLD.

In some embodiments, the second indication information includes a second field, wherein the second field indicates whether an MLO-only millimeter wave link or a millimeter wave link on which the second AP is located in an affiliated AP MLD supports independent operation.

The second field indicates that the MLO-only millimeter wave link or the millimeter wave link on which the second AP is located in the affiliated AP MLD supports the independent operation in a case where the second field takes a thirteenth value; or the second field indicates that the MLO-only millimeter wave link or the millimeter wave link on which the second AP is located in the affiliated AP MLD does not support the independent operation in a case where the second field takes a fourteenth value.

In some embodiments, the second field is an MLO-only mmWave Link Independent Operation Support subfield, the thirteenth value is 1, and the fourteenth value is 0.

In a case where the value of the MLO-only mmWave Link Independent Operation Support subfield is 1, the MLO-only millimeter wave link or the millimeter wave link on which the second AP is located in the affiliated AP MLD supports the independent operation. In a case where the value of the MLO-only mmWave Link Independent Operation Support subfield is 0, the MLO-only millimeter wave link or the millimeter wave link on which the second AP is located in the affiliated AP MLD does not support the independent operation.

Alternatively, the second field is an MLO-only mmWave Link Independent Operation Support subfield, the thirteenth value is 0, and the fourteenth value is 1.

In a case where the value of the MLO-only mmWave Link Independent Operation Support subfield is 0, the MLO-only millimeter wave link or the millimeter wave link on which the second AP is located in the affiliated AP MLD supports the independent operation. In a case where the value of the MLO-only mmWave Link Independent Operation Support subfield is 1, the MLO-only millimeter wave link or the millimeter wave link on which the second AP is located in the affiliated AP MLD does not support the independent operation.

Through the MLO-only mmWave Link Indication field and the MLO-only mmWave Link Independent Operation Support field in the MLD Parameters subfield, the operating parameters of the second AP are indicated. FIG. 17 is a schematic diagram of a format of an MLD Parameters subfield according to some embodiments of the present disclosure. The MLD Parameters subfield includes, in sequence: an AP MLD ID field, a Link ID field, a BSS Parameters Change Count field, an All Updates Included field, a Disabled Link Indication field, an MLO-only mmWave Link Indication field, and an MLO-only mmWave Link Independent Operation Support field.

The AP MLD ID field occupies eight bits (B0 to B7), the Link ID field occupies four bits (B8 to B11), the BSS Parameters Change Count field occupies eight bits (B12 to B19), the All Updates Included field occupies one bit (B20), the Disabled Link Indication field occupies one bit (B21), the MLO-only mmWave Link Indication field occupies one bit (B22), and the MLO-only mmWave Link Independent Operation Support field occupies one bit (B23).

The MLO-only mmWave Link Indication field indicates whether a reported AP (i.e., the second AP) operates on a millimeter wave link managed and controlled by another link in the AP MLD to which the reported AP is affiliated.

In a case where the MLO-only mmWave Link Indication field is set to 1, the reported AP operates on a millimeter wave link managed and controlled by another link in the AP MLD to which the reported AP is affiliated; or in a case where the MLO-only mmWave Link Indication field is set to 0, the reported AP does not operate on a millimeter wave link managed and controlled by another link in the AP MLD to which the reported AP is affiliated.

In a case where the value of the MLO-only mmWave Link Indication field is 1, the MLO-only mmWave Link Independent Operation Support field is optionally present, and if the MLO-only mmWave Link Independent Operation Support field is not present, the corresponding bit is reserved; and in a case where the value of the MLO-only mmWave Link Indication field is 0, the MLO-only mmWave Link Independent Operation Support field is not present, and the corresponding bit is reserved.

The MLO-only mmWave Link Independent Operation Support field indicates whether the millimeter wave link on which the reported AP is located in the AP MLD to which the reported AP is affiliated supports the independent operation.

In a case where the MLO-only mmWave Link Independent Operation Support field is set to 1, the millimeter wave link on which the reported AP is located may support the independent operation; or in a case where the MLO-only mmWave Link Independent Operation Support field is set to 0, the millimeter wave link on which the reported AP is located does not support the independent operation.

### Implementation 2:

In some embodiments, the second indication information includes a first field, wherein the first field indicates whether the second AP operates on an MLO-only managed and controlled link or a managed and controlled link in an affiliated AP MLD.

The first field indicates that the second AP operates on the MLO-only managed and controlled link or the managed and controlled link in the affiliated AP MLD in a case where the first field takes an eleventh value; or the first field indicates that the second AP does not operate on the MLO-only managed and controlled link or the managed and controlled link in the affiliated AP MLD in a case where the first field takes a twelfth value.

In some embodiments, the first field is an MLO-only Managed and Controlled Link Indication subfield, the eleventh value is 1, and the twelfth value is 0.

In a case where the value of the MLO-only Managed and Controlled Link Indication subfield is 1, the second AP operates on the MLO-only managed and controlled link or the managed and controlled link in the affiliated AP MLD. In a case where the value of the MLO-only Managed and Controlled Link Indication subfield is 0, the second AP does not operate on the MLO-only managed and controlled link or the managed and controlled link in the affiliated AP MLD.

Alternatively, the first field is an MLO-only Managed and Controlled Link Indication subfield, the eleventh value is 0, and the twelfth value is 1.

In a case where the value of the MLO-only Managed and Controlled Link Indication subfield is 0, the second AP operates on the MLO-only managed and controlled link or the managed and controlled link in the affiliated AP MLD. In a case where the value of the MLO-only Managed and Controlled Link Indication subfield is 1, the second AP does not operate on the MLO-only managed and controlled link or the managed and controlled link in the affiliated AP MLD.

In some embodiments, the second indication information includes a second field, wherein the second field indicates whether the MLO-only managed and controlled link or the managed and controlled link on which the second AP is located in the affiliated AP MLD supports independent operation.

The second field indicates that the MLO-only managed and controlled link or the managed and controlled link on which the second AP is located in the affiliated AP MLD supports the independent operation in a case where the second field takes a thirteenth value; or the second field indicates that the MLO-only managed and controlled link or the managed and controlled link on which the second AP is located in the affiliated AP MLD does not support the independent operation in a case where the second field takes a fourteenth value.

In some embodiments, the second field is an MLO-only Link Independent Operation Support subfield, the thirteenth value is 1, and the fourteenth value is 0.

In a case where the value of the MLO-only Link Independent Operation Support subfield is 1, the MLO-only managed and controlled link or the managed and controlled link on which the second AP is located in the affiliated AP MLD supports the independent operation. In a case where the value of the MLO-only Link Independent Operation Support subfield is 0, the MLO-only managed and controlled link or the managed and controlled link on which the second AP is located in the affiliated AP MLD does not support the independent operation.

Alternatively, the second field is an MLO-only Link Independent Operation Support subfield, the thirteenth value is 0, and the fourteenth value is 1.

In a case where the value of the MLO-only Link Independent Operation Support subfield is 0, the MLO-only managed and controlled link or the managed and controlled link on which the second AP is located in the affiliated AP MLD supports the independent operation. In a case where the value of the MLO-only Link Independent Operation Support subfield is 1, the MLO-only managed and controlled link or the managed and controlled link on which the second AP is located in the affiliated AP MLD does not support the independent operation.

Through the MLO-only Managed and Controlled Link Indication field and the MLO-only Link Independent Operation Support field in the MLD Parameters subfield, the operating parameters of the second AP are indicated. FIG. 18 is a schematic diagram of a format of an MLD Parameters subfield according to some embodiments of the present disclosure. The f MLD Parameters subfield includes, in sequence: an AP MLD ID field, a Link ID field, a BSS Parameters Change Count field, an All Updates Included field, a Disabled Link Indication field, an MLO-only Managed and Controlled Link Indication field, and an MLO-only Link Independent Operation Support field/a Reserved field.

The AP MLD ID field occupies eight bits (B0 to B7), the Link ID field occupies four bits (B8 to B11), the BSS Parameters Change Count field occupies eight bits (B12 to B19), the All Updates Included field occupies one bit (B20), the Disabled Link Indication field occupies one bit (B21), the MLO-only Managed and Controlled Link Indication field occupies one bit (B22), and the MLO-only Link Independent Operation Support field/the Reserved field occupies one bit (B23).

The MLO-only Managed and Controlled Link Indication field indicates whether the reported AP (i.e., the second AP) operates on an MLO-only link managed and controlled by another link in the AP MLD to which the reported AP is affiliated.

In a case where the MLO-only Managed and Controlled Link Indication field is set to 1, the reported AP operates on an MLO-only link managed and controlled by another link in the AP MLD to which the reported AP is affiliated; and in a case where the MLO-only Managed and Controlled Link Indication field is set to 0, the reported AP does not operate on an MLO-only link managed and controlled by another link in the AP MLD to which the reported AP is affiliated.

In a case where the value of the MLO-only Managed and Controlled Link Indication field is 1, the MLO-only Link Independent Operation Support field is optionally present, and if the MLO-only Managed and Controlled Link Indication field is not present, the corresponding bit is reserved; and in a case where the value of the MLO-only Managed and Controlled Link Indication field is 0, the MLO-only Link Independent Operation Support subfield is not present, and the corresponding bit is reserved.

The MLO-only Link Independent Operation Support field indicates whether the link on which the reported AP (i.e., the second AP) is located in the AP MLD to which the reported AP is affiliated supports the MLO-only link to operate independently.

In a case where the MLO-only Link Independent Operation Support field is set to 1, the link on which the reported AP is located in the AP MLD to which the reported AP is affiliated supports the MLO-only link to operate independently; and in a case where the MLO-only Link Independent Operation Support field is set to 0, the link on which the reported AP is located in the AP MLD to which the reported AP is affiliated does not support the MLO-only link to operate independently.

With respect to the MLO-only managed and controlled millimeter wave link, whether the link is an MLO-only managed and controlled millimeter wave link may be identified over the MLO-only Managed and Controlled Link Indication subfield and/or the MLO-only Link Independent Operation Support subfield included in the MLD Parameters subfield and in combination with a Supported Operating Classes element corresponding to the operation link of the reported AP. The Supported Operating Classes element corresponding to the operation link of the reported AP is carried in a frame in which the Reduced Neighbor Report element is transmitted.

### Implementation 3:

In some embodiments, the second indication information is carried in an MLD Parameters subfield in a TBTT Information field in a Neighbor AP Information field in a Reduced Neighbor Report element.

In some embodiments, the second indication information includes a TBTT Type subfield value and a TBTT Information Length subfield.

The TBTT Type subfield value takes a fifteenth value and the TBTT Information Length subfield takes a sixteenth value, which indicate that the second AP operates on an MLO-based millimeter wave link in an affiliated AP MLD.

In some embodiments, in a case where the TBTT Type subfield value is 2 or 3 and the TBTT Information Length subfield is equal to or greater than 3, the second AP operates on the MLO-only managed and controlled link or the managed and controlled link in the affiliated AP MLD, which includes at least one of:
in a case where the TBTT Type subfield value is 2 and the TBTT Information Length subfield is 3, the second AP operates on the MLO-only managed and controlled link or the managed and controlled link in the affiliated AP MLD; or
in a case where the TBTT Type subfield value is 3 and the TBTT Information Length subfield is 3, the second AP operates on the MLO-only managed and controlled link or the managed and controlled link in the affiliated AP MLD; or
in a case where the TBTT Type subfield value is 2 and the TBTT Information Length subfield is greater than 3, the second AP operates on the MLO-only managed and controlled link or the managed and controlled link in the affiliated AP MLD; or
in a case where the TBTT Type subfield value is 3 and the TBTT Information Length subfield is greater than 3, the second AP operates on the MLO-only managed and controlled link or the managed and controlled link in the affiliated AP MLD.

In some embodiments, in a case where the TBTT Information Field Type subfield is 2 and the TBTT Information Length subfield is equal to 4, the TBTT Information field includes an MLD Parameters subfield occupying three octets and a Reserved field having a length of one octet. FIG. 19 is a schematic diagram of a format of a TBTT Information field according to some embodiments of the present disclosure. The TBTT Information field includes, in sequence: an MLD Parameters field and a Reserved field.

The MLD Parameters field occupies three octets, and the Reserved field occupies zero or another value of octets.

In some embodiments, the second indication information includes a second field, wherein the second field indicates whether the MLO-only managed and controlled link or the managed and controlled link on which the second AP is located in the affiliated AP MLD supports independent operation.

The second field indicates that the MLO-only managed and controlled link or the managed and controlled link on which the second AP is located in the affiliated AP MLD supports the independent operation in a case where the second field takes a seventeenth value; or the second field indicates that the MLO-only managed and controlled link or the managed and controlled link on which the second AP is located in the affiliated AP MLD does not support the independent operation in a case where the second field takes an eighteenth value.

In some embodiments, the second field is an MLO-only Link Independent Operation Support subfield, the seventeenth value is 1, and the eighteenth value is 0.

In a case where the value of the MLO-only Link Independent Operation Support subfield is 1, the MLO-only managed and controlled link or the managed and controlled link on which the second AP is located in the affiliated AP MLD supports the independent operation. In a case where the value of the MLO-only Link Independent Operation Support subfield is 0, the MLO-only managed and controlled link or the managed and controlled link on which the second AP is located in the affiliated AP MLD does not support the independent operation.

Alternatively, the second field is an MLO-only Link Independent Operation Support subfield, the seventeenth value is 0, and the eighteenth value is 1.

In a case where the value of the MLO-only Link Independent Operation Support subfield is 0, the MLO-only managed and controlled link or the managed and controlled link on which the second AP is located in the affiliated AP MLD supports the independent operation. In a case where the value of the MLO-only Link Independent Operation Support subfield is 1, the MLO-only managed and controlled link or the managed and controlled link on which the second AP is located in the affiliated AP MLD does not the support independent operation.

FIG. 20 is a schematic diagram of a format of an MLD Parameters subfield according to some embodiments of the present disclosure. The MLD Parameters subfield includes, in sequence: an AP MLD ID field, a Link ID field, a BSS Parameters Change Count field, an All Updates Included field, a Disabled Link Indication field, an MLO-only Link Independent Operation Support, and a Reserved field.

The AP MLD ID field occupies eight bits (B0 to B7), the Link ID field occupies four bits (B8 to B11), the BSS Parameters Change Count field occupies eight bits (B12 to B19), the All Updates Included field occupies one bit (B20), the Disabled Link Indication field occupies one bit (B21), the MLO-only Link Independent Operation Support field occupies one bit (B22), and the Reserved field occupies one bit (B23).

The MLO-only Link Independent Operation Support field indicates whether the link on which the reported AP (i.e., the second AP) is located in the AP MLD to which the reported AP is affiliated supports the MLO-only link to operate independently.

In a case where the MLO-only Link Independent Operation Support field is set to 1, the link on which the reported AP is located in the AP MLD to which the reported AP is affiliated supports the MLO-only link to operate independently; or in a case where the MLO-only Link Independent Operation Support field is set to 0, the link on which the reported AP is located in the AP MLD to which the reported AP is affiliated does not support the MLO-only link to operate independently.

In some embodiments, the second frame includes at least one of a Beacon frame, an Association Response frame, a Probe Response frame, or another management frame other than the Beacon frame, the Association Response frame, and the Probe Response frame.

The Beacon frame carries information such as capability information, SSID, and supported rates. The Association Response frame is used for the AP to respond to the STA's approval for association. The Probe Response frame is used for the AP to respond to a broadcast request of the STA, and content of the Probe Response frame is substantially the same as that of the Beacon frame.

In some embodiments, a timing synchronization function (TSF) timer corresponding to the managing and controlling link is consistent with or the same as the TSF timer corresponding to the managed and controlled link.

In an example where the managed and controlled link is a millimeter wave link, in a case where TSF timers are consistent, when a non-AP MLD is associated with the MLO-only mmW-S AP MLD and sets up a plurality of links including the managing and controlling link and the millimeter wave link, the non-AP MLD synchronizes the time of all TSF timers maintained for the managing and controlling link and all millimeter wave links.

In a case where the TSF timers are the same, if a non-AP MLD is associated with the MLO-only mmW-S AP MLD and sets up a plurality of links including the managing and controlling link and the millimeter wave link, the non-AP MLD maintains a same TSF timer for the managing and controlling link and all millimeter wave links.

In some embodiments, in the MLO-only mode, the managed and controlled link is a link set up based on the managing and controlling link, or the managed and controlled link is a link set up subsequent to the managing and controlling link, or a procedure for setting up the managed and controlled link is performed based on the managing and controlling link.

In some embodiments, in the MLO-only mode, multiple links are set up by performing, during a multi-link setup process, frame exchange on the managing and controlling link during procedures of authentication, association or reassociation, and 4-way handshake, wherein the multiple links include the managing and controlling link and the managed and controlled link.

The AP MLD transmitting the second frame carrying the second indication information; or transmitting the first frame carrying the first indication information and the second indication information described above, includes: the first AP transmitting the second frame carrying the second indication information, wherein the second indication information indicates an operating parameter of the second AP; or the first AP transmitting the first frame carrying the first indication information and the second indication information.

In some embodiments, the first AP transmits the second frame carrying the second indication information on the managing and controlling link; or the first AP transmits the first frame carrying the first indication information and the second indication information on the managing and controlling link.

In summary, in the method according to the embodiments of the present disclosure, the second frame carrying the second indication information is transmitted, or the first frame carrying the first indication information and the second indication information is transmitted, wherein the second indication information indicates the operating parameter of the second AP, such that the capability of the AP MLD corresponding to the second AP is released to facilitate discovery by the non-AP MLD.

The method according to the embodiment also achieves the effect of time synchronization on the managing and controlling link and the managed and controlled link by setting the TSF timer corresponding to the managing and controlling link to be consistent with or the same as the TSF timer corresponding to the managed and controlled link.

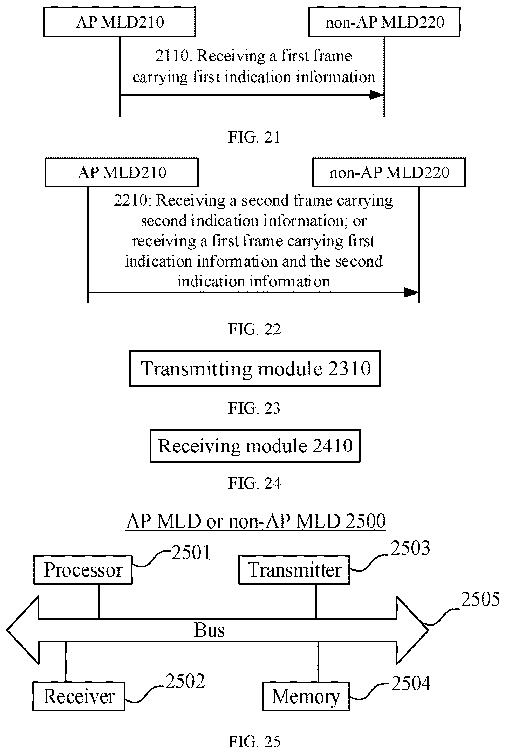

FIG. 21 is a flowchart of a method for MLD communication according to some embodiments of the present disclosure. The method is applicable to a non-AP MLD. The method includes the following processes.

**In process 2110,** the non-AP MLD receives a first frame carrying first indication information.

The first indication information indicates whether an AP MLD corresponding to the non-AP MLD supports at least one of an MLO type or mode based on a managing and controlling link and a managed and controlled link, supports the managed and controlled link, supports a millimeter wave link, or supports a corresponding operation mode.

In some embodiments, the operation mode includes at least one of: an MLO-only mode, wherein the MLO-only mode refers to a mode in which the managed and controlled link performs a multi-link setup based on the managing and controlling link, and/or a mode in which the managing and controlling link manages and/or controls the managed and controlled link in all states or some states based on the MLO; or a non-MLO-only mode, wherein the non-MLO-only mode refers to a mode in which the managed and controlled link operates independently.

In some embodiments, the MLO-only mode includes at least one of a first operation mode or a second operation mode, wherein the first operation mode is a mode in which the managing and controlling link is in a mandatory enabled state, and the managing and controlling link manages the managed and controlled link; and the second operation mode is a mode in which the managing and controlling link is in a non-mandatory enabled state, and in a case where the managing and controlling link is in an enabled state, the managing and controlling link manages the managed and controlled link, and/or, the managed and controlled link operates independently, or in a case where the managing and controlling link is in a disabled state, the managed and controlled link operates independently.

In some embodiments, the first operation mode is referred to as an MLO-based mandatory enabled operation mode of the managing and controlling link, or a non-independent operation mode of the managed and controlled link, or a mandatory enabled operation mode of the managing and controlling link; the second operation mode is referred to as an MLO-based non-mandatory enabled operation mode of the managing and controlling link, or a semi-independent operation mode of the managed and controlled link, or a non-mandatory enabled operation mode of the managing and controlling link; and the non-MLO-only mode is referred to as a non operation-only mode of multiple links or an independent operation mode of the managed and controlled link.

In some embodiments, the managed and controlled link, when operating in an MLO-based independent operation mode (i.e., a semi-independent operation mode of the managed and controlled link), is used for transmitting at least one of the following management frames: a type 3 management frame in which the Beacon frame is individually addressed, an individually addressed deauthentication frame, an individually addressed disassociation frame, or an individually addressed multi-link probe request.

In some embodiments, the managed and controlled link, when operating in an MLO-based controlled operation mode (i.e., a non-independent operation mode of the managed and controlled link), is not used for transmitting at least one of the following management frames: a type 3 management frame in which the Beacon frame is individually addressed, an individually addressed deauthentication frame, an individually addressed disassociation frame, or an individually addressed multi-link probe request.

In some embodiments, the managing and controlling link includes a low-frequency link, and the managed and controlled link includes at least one of a low-frequency link or a millimeter wave link. The embodiments are exemplified by a managed and controlled link including a millimeter wave link.

In some embodiments, the first indication information includes a first bit.

The first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or

the first bit indicates that the AP MLD supports the managed and controlled link in a case where the first bit takes a first value; or the first bit indicates that the AP MLD does not support the managed and controlled link in a case where the first bit takes a second value; or

the first bit indicates that the AP MLD supports the millimeter wave link in a case where the first bit takes a first value; or the first bit indicates that the AP MLD does not support the millimeter wave link in case where the first bit takes a second value.

In some embodiments, the first indication information includes a second bit.

The second bit indicates an AP MLD type operating in the MLO-only mode in a case where the second bit takes a third value; or the second bit indicates an AP MLD type operating in the non-MLO-only mode in a case where the second bit takes a fourth value.

In some embodiments, the first indication information includes a second bit.

The second bit indicates an mmW-S AP MLD type operating in the MLO-only mode in a case where the second bit takes the third value and the managed and controlled link is the millimeter wave link; or the second bit indicates an mmW-S AP MLD type operating in the non-MLO-only mode in a case where the second bit takes the fourth value and the managed and controlled link is the millimeter wave link.

In some embodiments, the first indication information includes a third bit.

The third bit indicates an AP MLD sub-type operating in the first operation mode in a case where the third bit takes a fifth value; or the third bit indicates an AP MLD sub-type operating in the second operation mode in a case where the third bit takes a sixth value.

In some embodiments, the first indication information includes a third bit.

The third bit indicates an mmW-S AP MLD sub-type operating in the first operation mode in a case where the third bit takes the fifth value and the managed and controlled link is the millimeter wave link; or the third bit indicates an mmW-S AP MLD sub-type operating in the second operation mode in a case where the third bit takes the sixth value and the managed and controlled link is the millimeter wave link.

In some embodiments, the first indication information includes a fourth bit.

The fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

In some embodiments, the first indication information includes a fourth bit.

The fourth bit indicates that the AP MLD is not an MLO-only mmW-S AP MLD in a case where the fourth bit takes the seventh value and the managed and controlled link is the millimeter wave link; or the fourth bit indicates that the AP MLD is the MLO-only mmW-S AP MLD in a case where the fourth bit takes the eighth value and the managed and controlled link is the millimeter wave link.

In some embodiments, the first indication information includes a fifth bit.

The fifth bit indicates an AP MLD type operating in the first operation mode in a case where the fifth bit takes a ninth value; or the fifth bit indicates an AP MLD type operating in the second operation mode in a case where the fifth bit takes a tenth value.

In some embodiments, the first indication information includes a fifth bit.

The fifth bit indicates an mmW-S AP MLD type operating in the first operation mode in a case where the fifth bit takes the ninth value and the managed and controlled link is the millimeter wave link; or the fifth bit indicates an mmW-S AP MLD type operating in the second operation mode in a case where the fifth bit takes the tenth value and the managed and controlled link is the millimeter wave link.

In some embodiments, the first indication information includes an indication field including two bits. In a case where the indication field takes a value of a first codepoint, an AP MLD type operating in the first operation mode is indicated. In a case where the indication field takes a value of a second codepoint, an AP MLD type operating in the second operation mode is indicated. In a case where the indication field takes a value of a third codepoint, an AP MLD type operating in the non-MLO-only mode is indicated.

In some embodiments, the first indication information includes an indication field including two bits. In a case where the indication field takes the value of the first codepoint and the managed and controlled link is the millimeter wave link, an mmW-S AP MLD type operating in the first operation mode is indicated. In a case where the indication field takes the value of the second codepoint and the managed and controlled link is the millimeter wave link, an mmW-S AP MLD type operating in the second operation mode is indicated. In a case where the indication field takes the value of the third codepoint and the managed and controlled link is the millimeter wave link, an mmW-S AP MLD type operating in the non-MLO-only mode is indicated.

In some embodiments, the first indication information is carried in an AP MLD Type Indication subfield in an MLD Capabilities and Operations subfield of a Common Info field in a Basic Multi-link element.

In some embodiments, the first frame includes at least one of a Beacon frame, an Association Response frame, a Probe Response frame, or another management frame other than the Beacon frame, the Association Response frame, and the Probe Response frame.

For specific implementation details of the above method for MLD communication, reference may be made to the method for MLD communication performed by the AP MLD, which will not be repeated herein any further.

FIG. 22 is a flowchart of a method for MLD communication according to some embodiments of the present disclosure. The method is applicable to a non-AP MLD, wherein the non-AP MLD includes a second STA. The method includes the following processes.

**In process 2210,** the non-AP MLD receives a second frame carrying second indication information, or receives a first frame carrying the first indication information and the second indication information.

In some embodiments, the non-AP MLD includes a first STA operating on the managing and controlling link; receiving the first frame carrying the first indication information, includes: receiving, by the first STA, the first frame carrying the first indication information.

In some embodiments, the AP MLD corresponding to the non-AP MLD includes a second AP, and the method further includes: receiving the second frame carrying the second indication information; or receiving the first frame carrying the first indication information and the second indication information.

The second indication information includes a first field, wherein the first field indicates whether the second AP operates on an MLO-only millimeter wave link, or an MLO-only managed and controlled link, or a millimeter wave link, or the managed and controlled link in an affiliated AP MLD.

In some embodiments, the first field indicates that the second AP operates on the MLO-only millimeter wave link, or the MLO-only managed and controlled link, or the millimeter wave link, or the managed and controlled link in the affiliated AP MLD in a case where the first field takes an eleventh value; or the first field indicates that the second AP does not operate on the MLO-only millimeter wave link, or the MLO-only managed and controlled link, or the millimeter wave link, or the managed and controlled link in the affiliated AP MLD in a case where the first field takes a twelfth value.

In some embodiments, the second indication information includes a second field, wherein the second field indicates whether an MLO-only millimeter wave link, or an MLO-only managed and controlled link, or a millimeter wave link, or the managed and controlled link on which the second AP is located in an affiliated AP MLD supports independent operation.

In some embodiments, the second field indicates that the MLO-only millimeter wave link, or the MLO-only managed and controlled link, or the millimeter wave link, or the managed and controlled link on which the second AP is located in the affiliated AP MLD supports the independent operation in a case where the second field takes a thirteenth value; or the second field indicates that the MLO-only millimeter wave link, or the MLO-only managed and controlled link, or the millimeter wave link, or the managed and controlled link on which the second AP is located in the affiliated AP MLD does not support the independent operation in a case where the second field takes a fourteenth value.

In some embodiments, the second indication information is carried in an MLD Parameters subfield in a TBTT Information field in a Neighbor AP Information field in a Reduced Neighbor Report element.

In some embodiments, the second indication information includes a TBTT Type subfield value and a TBTT Information Length subfield.

The TBTT Type subfield value takes a fifteenth value and the TBTT Information Length subfield takes a sixteenth value, which indicate that the second AP operates on an MLO-based millimeter wave link in an affiliated AP MLD.

In some embodiments, in a case where the TBTT Type subfield value is 2 or 3 and the TBTT Information Length subfield is equal to or greater than 3, the second AP operates on the MLO-only managed and controlled link or the managed and controlled link in the affiliated AP MLD.

In some embodiments, the second indication information includes a second field, wherein the second field indicates whether the MLO-only managed and controlled link or the managed and controlled link on which the second AP is located in the affiliated AP MLD supports an independent operation mode.

The second field indicates that the MLO-only managed and controlled link or the managed and controlled link on which the second AP is located in the affiliated AP MLD supports the independent operation mode in a case where the second field takes a seventeenth value; or the second field indicates that the MLO-only managed and controlled link or the managed and controlled link on which the second AP is located in the affiliated AP MLD does not support the independent operation mode in a case where the second field takes an eighteenth value.

In some embodiments, the second frame includes at least one of a Beacon frame, an Association Response frame, a Probe Response frame, or another management frame other than the Beacon frame, the Association Response frame, and the Probe Response frame.

In some embodiments, the non-AP MLD includes a first STA operating on the managing and controlling link, and receiving the second frame carrying the second indication information; or receiving the first frame carrying the first indication information and the second indication information, includes: receiving, by the first STA, the second frame carrying the second indication information, wherein the second indication information indicates the operating parameter of the second AP; or receiving, by the first STA, the first frame carrying the first indication information and the second indication information.

In some embodiments, a TSF timer corresponding to the managing and controlling link is consistent with or the same as the TSF timer corresponding to the managed and controlled link.

In some embodiments, in the MLO-only mode, the managed and controlled link is a link set up based on the managing and controlling link, or the managed and controlled link is a link set up subsequent to the managing and controlling link, or a procedure for setting up the managed and controlled link is performed based on the managing and controlling link.

In some embodiments, multiple links are set up by performing, in the MLO-only mode, during a multi-link setup process, frame exchange on the managing and controlling link during procedures of authentication, association or reassociation, and 4-way handshake, wherein the multiple links include the managing and controlling link and the managed and controlled link.

For specific implementation details of the above method for MLD communication, reference may be made to the method perform by the AP MLD, which will not be repeated herein any further.

In order to solve the problems of large signal attenuation, susceptibility to blocking, short coverage distance, and high power consumption of millimeter wave communication devices in the millimeter wave communication, the present disclosure provides a method for MLD communication based on a millimeter wave link, in which the multi-link communication devices supporting millimeter wave communication is classified based on the MLO mode between the millimeter wave link and the low-frequency link, and functions and capabilities of the multi-link communication devices are released based on the types of the multi-link communication devices supporting millimeter wave communication to facilitate discovery by non-AP MLDs. The following contents are mainly included.
1. The operation mode and device type of the millimeter wave link-supported AP MLD (i.e., mmW-S AP MLD) are defined:
   1) an MLO-only mode; and
   2) a non-MLO-only mode.

The MLO-only mode includes:
(1) an MLO-based mandatory enabled operation mode of the low-frequency link (i.e., not supporting an MLO-based independent operation mode of the millimeter wave link); and
(2) an MLO-based non-mandatory enabled operation mode of the low-frequency link (i.e., supporting an MLO-based independent operation mode of the millimeter wave link, or referred to as a semi-independent operation mode of the millimeter wave link).

2. The discovery and operation method of an MLO-only mmW-S AP MLD are defined.

In the MLD Capabilities and Operations subfield in the Common Info field in the Basic Multi-link element, content for defining the AP MLD Type Indication subfield is refined, and the support for the MLO-only mmW-S AP MLD type and the sub-type indication thereof is added. Meanwhile, in the MLD Parameters subfield of the TBTT Information field in the Neighbor AP Information field in the Reduced Neighbor Report element, content for defining an MLO-only mmWave Link Indication subfield and an MLO-only mmWave Link Independent Operation Support subfield is added, and the support for the millimeter wave link functionality and capability parameter indication is added.

The technical solutions of the present disclosure include the following content.

The MLO-only mmWAVE-supported AP MLD (MLO-only mmW-S AP MLD) includes one or more affiliated APs operating in a low-frequency band (e.g., less than 7 GHz, i.e., sub-7 GHz) corresponding to one or more low-frequency operation links, respectively, and one or more affiliated APs operating in a high-frequency (e.g., a millimeter wave band) corresponding to one or more millimeter wave band operation links, respectively. The MLO-only mmW-S AP MLD specifies one link (usually a low-frequency link) as a managing and controlling link (or referred to as a first link, or a managing link, or a controlling link, or a primary link) to manage and control the communication of the millimeter wave link, and the millimeter wave link, as a managed and controlled link (or referred to as a second link, or a managed link, or a controlled link, or a secondary link), has communication thereof managed and controlled by the first link. The MLO-only mmW-S AP MLD schedules and transmits a Beacon frame, a Probe Response frame, and a group-addressed data frame on the first link; and the millimeter wave link is mainly used for data transmission as the second link, and optionally supports transmission of the Beacon frame, the Probe Response frame, and the group-addressed data frame.

### 1. The mmW-S AP MLD including at least one of the following operation modes.

### 1) An MLO-only mode:

With respect to the mmW-S AP MLD operating in the MLO-only mode (MLO-only mmW-S AP MLD), if an STA device needs to set up a link with the MLO-only mmW-S AP MLD on the millimeter wave link, the station device must first set up a link with the MLO-only mmW-S AP MLD on a low-frequency link and then set up a link on the millimeter wave link, or complete a multi-link setup on the low-frequency link and the millimeter wave link simultaneously.

In a case where the non-AP MLD intends to perform a multi-link setup with the MLO-only mmW-S AP MLD on one or more second links including the first link and the millimeter wave link specified by the MLO-only mmW-S AP MLD, frame exchange is performed on the low-frequency link during the procedures of authentication, association or reassociation, and 4-way handshake.

The TSF timer corresponding to the low-frequency link in the MLO-only mmW-S AP MLD is consistent with the TSF timer corresponding to the millimeter wave link as the second link. If a non-AP MLD is associated with the MLO-only mmW-S AP MLD and sets up multiple links including the low-frequency link and the millimeter wave link, the non-AP MLD maintains a TSF timer for the first link and all second links.

With respect to the MLO-only mmW-S AP MLD, if a non-AP MLD is associated with the MLO-only mmW-S AP MLD, or referred to as completing a multi-link setup with the MLO-only mmW-S AP MLD on the low-frequency link and the millimeter wave link simultaneously, the non-AP MLD operation mode that the MLO-only mmW-S AP MLD can support includes the following two modes.

### (1) An MLO-based mandatory enabled operation mode of the low-frequency link (i.e., not supporting an MLO-based independent operation mode of the millimeter wave link)

In the low-frequency link and the millimeter wave link on which the non-AP MLD and the MLO-only mmW-S AP MLD complete the multi-link setup, the low-frequency link must be in a mandatory enabled state but cannot be in a disabled state, so as to establish the management and control for the millimeter wave link. In addition, the millimeter wave link may be in an enabled state or a disabled state. Meanwhile, the low-frequency link cannot be removed in a case where the millimeter wave link remains in the setup state.

### (2) An MLO-based non-mandatory enabled operation mode of the low-frequency link (i.e., supporting an MLO-based independent operation mode of the millimeter wave link)

In the low-frequency link and the millimeter wave link on which the non-AP MLD and the MLO-only mmW-S AP MLD complete the multi-link setup, the low-frequency link is allowed to be in an enabled state or a disabled state. In a case where the low-frequency link is in a disabled state, self-link management and control and data communication may be performed independently on the millimeter wave link. In some embodiments, the low-frequency link is allowed to be removed in a case where the millimeter wave link remains in the setup state.

### 2) A non-MLO-only mode:

If an STA device needs to set up a link with the mmW-S AP MLD on the millimeter wave link, a multi-link setup may be simultaneously completed on the low-frequency link and the millimeter wave link; or a link may be independently set up on the millimeter wave link, that is, an association of the STA device with an AP corresponding to the millimeter wave link affiliated to the mmW-S AP MLD is completed on the millimeter wave link.

### 2. The discovery of an MLO-only mmW-S AP MLD:

An affiliated AP operating on the low-frequency link in the MLO-only mmW-S AP MLD indicates that the MLO-only mmW-S AP MLD is an MLO-only millimeter wave link-supported AP MLD (i.e., an MLO-only mmW-S AP MLD) by setting bit B8 of an AP MLD Type Indication subfield of an MLD Capabilities and Operations subfield of a Common Info field in a Basic Multi-link element transmitted by the affiliated AP to 1; further, in a case where the B8 bit is set to 1, B9 is set to 1 to indicate the mmW-S AP MLD sub-type operating in the MLO-based low-frequency link mandatory enabled operation mode, or B9 is set to 0 to indicate the mmW-S AP MLD sub-type operating in the MLO-based low-frequency link non-mandatory enabled operation mode.

The affiliated AP operating on the low-frequency link in the MLO-only mmW-S AP MLD includes a Reduced Neighbor Report element in the transmitted Beacon frame and Probe Response frame, and a TBTT Information field of the element carries an MLD Parameters subfield corresponding to a reported AP affiliated to the MLO-only mmW-S AP MLD and operating on the millimeter wave link. The indication for the millimeter wave link includes the following two manners.
(1) The TBTT Information field is identified to be used for the reported AP operating on the millimeter wave link over a TBTT Information Field Type subfield value in combination with a TBTT Information Length subfield. For example, in a case where the TBTT Information Field Type subfield is 2 or 3 and the TBTT Information Length subfield is equal to 4, the TBTT Information field includes an MLD Parameters subfield having a length of three octets and a reserved field having a length of one octet. The TBTT Information field indicates the information of the reported AP operating on the millimeter wave link.
(2) It is indicated that the reported AP operates on the millimeter wave link by setting an MLO-only mmWave Link Indication subfield to 1 in the MLD Parameters subfield of the TBTT Information field in the Neighbor AP Information field in the Reduced Neighbor Report element. Further, it is indicated that the millimeter wave link on which the reported AP is located may support the independent operation mode by setting an MLO-only mmWave Link Independent Operation Support subfield to 1; while it is indicated that the millimeter wave link on which the reported AP is located does not support the independent operation mode by setting the MLO-only mmWave Link Independent Operation Support subfield to 0.

The Reduced Neighbor Report element carries channels and other information related to neighbor APs and includes one or more Neighbor AP Information fields.

The Neighbor AP Information field is used to define TBTT and other information of a group of neighbor APs located on a channel and includes a TBTT Information Header subfield, a TBTT Information Set field, and the like. The TBTT Information Header subfield carried therein includes a TBTT Information Field Type subfield and a TBTT Information Length subfield. The TBTT Information Field Type subfield and the TBTT Information Length subfield together identify the format of the TBTT Information field. The TBTT Information Set field includes one or more TBTT Information fields. The TBTT Information Length subfield indicates a length of each TBTT Information field included in the TBTT Information Set field.

In a case where the TBTT Information Field Type subfield is set to 0, contents of the TBTT Information field are illustrated in Table 1 in combination with the TBTT Information Length subfield. The current specification specifies that the value of the TBTT Information Field Type subfield is set to 0 or 1, while the values 2 and 3 are reserved.

In a case where the TBTT Information Field Type subfield is 1 and the TBTT Information Length subfield is 3, the TBTT Information field includes the MLD Parameters subfield; in a case where the value of the TBTT Information Length subfield is greater than 3, the first three octets of the TBTT Information field include the MLD Parameters subfield. The current specification specifies that the TBTT Information Field Type subfield is 1 and the format of the TBTT Information field of the reported AP operating on the non-primary link is identified in combination with the TBTT Information Length subfield.

Specific embodiments of the present disclosure are as follows.

### I. Definitions of subfields related to description of functions and capabilities of mmW-S AP MLD

### 1. Definition of a representation format of the mmW-S AP MLD type.

The mmW-S AP MLD may be classified into the following types.
**(1) An mmW-S AP MLD type operating in an MLO-only mode (i.e., an MLO-only mmW-S AP MLD);**
   1) an mmW-S AP MLD sub-type operating in the MLO-based low-frequency link mandatory enabled operation mode; and
   2) an mmW-S AP MLD sub-type operating in the MLO-based low-frequency link non-mandatory enabled operation mode.
**(2) An mmW-S AP MLD type operating in a non-MLO-only mode (i.e., a non-MLO-only mmW-S AP MLD);**
The AP MLD carries the Basic Multi-link element in the transmitted Beacon frame, Probe Response frame, and other management frames. The Beacon frame, Probe Response frame, and other management frames may be transmitted on the low-frequency link, and the receiver is an STA to be associated or an associated STA. In the MLD Capabilities and Operations subfield in the Common Info field in the Basic Multi-link element, content for defining the AP MLD Type Indication subfield is refined, and the support for the mmW-S AP MLD type and the sub-type indication thereof is added. The details are as follows.

For encoding of the AP MLD Type Indication subfield, the following indications are added (as illustrated in Table 2):
1) B8 is set to 0 to indicate that the AP MLD is not an MLO-only mmW-S AP MLD;
2) B8 is set to 1 to indicate that the AP MLD is an MLO-only mmW-S AP MLD;
3) in a case where B8 is 1, B9 is set to 1 to indicate the mmW-S AP MLD sub-type operating in the MLO-based low-frequency link mandatory enabled operation mode; or B9 is set to 0 to indicate the mmW-S AP MLD sub-type operating in the MLO-based low-frequency link non-mandatory enabled operation mode; and
4) in a case where B8 is 0, B9 is reserved.

**Table 2**

| Subfield | Definition | Encoding |
|---|---|---|
| AP MLD Type Indication | Defined to indicate the type of the AP MLD | The AP MLD Type Indication subfield is applicable to the AP MLD and is encoded as follows: |
| | | ·B7 is set to 0 to indicate that the AP MLD is not a non-simultaneous transmit and receive mobile AP MLD (NSTR mobile AP MLD); |
| | | ·B7 is set to 1 to indicate that the AP MLD is an NSTR mobile AP MLD; |
| | | ·B8 is set to 0 to indicate that the AP MLD is not an MLO-only mmW-S AP MLD; |
| | | ·B8 is set to 1 to indicate that the AP MLD is an MLO-only mmW-S AP MLD; |
| | | ·in a case where B8 is 1, B9 is set to 1 to indicate the mmW-S AP MLD sub-type operating in the MLO-based low-frequency link mandatory enabled operation mode; or B9 is set to 0 to indicate the mmW-S AP MLD sub-type operating in the MLO-based low-frequency link non-mandatory enabled operation mode; and |
| | | ·in a case where B8 is 1, B9 is reserved. |

### 2. Definition of a representation format of the millimeter wave link related parameters;

The AP MLD carries the Reduced Neighbor Report element in the transmitted Beacon frame, Probe Response frame, and other management frames to indicate MLO-only managed and controlled link related information. The Beacon frame, Probe Response frame, and other management frames may be transmitted on the managing and controlling link (such as the low-frequency link). The representation format of the MLO-only managed and controlled link related information is as follows.
**1) A representation format-I of the MLO-only managed and controlled link related information (explicitly indicating the millimeter wave link).**

In the MLD Parameters subfield of the TBTT Information field in the Neighbor AP Information field in the Reduced Neighbor Report element, content for defining an MLO-only mmWave Link Indication subfield and an MLO-only mmWave Link Independent Operation Support subfield is added, and the support for the millimeter wave link functionality and capability parameter indication is added.

The MLO-only mmWave Link Indication subfield indicates whether the reported AP operates on a millimeter wave link managed and controlled by another link in the AP MLD to which the reported AP is affiliated. In a case where the MLO-only mmWave Link Indication subfield is set to 1, the reported AP operates on a millimeter wave link managed and controlled by another link in the AP MLD to which the reported AP is affiliated; or in a case where the MLO-only mmWave Link Indication subfield is set to 0, the reported AP does not operate on a millimeter wave link managed and controlled by another link in the AP MLD to which the reported AP is affiliated.

In a case where a value of the MLO-only mmWave Link Indication subfield is 1, the MLO-only mmWave Link Independent Operation Support subfield is optionally present, and if the MLO-only mmWave Link Independent Operation Support subfield is not present, the corresponding bit is reserved. In a case where the value of the MLO-only mmWave Link Indication subfield is 0, the MLO-only mmWave Link Independent Operation Support subfield is not present, and the corresponding bit is reserved.

The MLO-only mmWave Link Independent Operation Support subfield indicates whether the millimeter wave link on which the reported AP is located in the AP MLD to which the reported AP is affiliated supports the independent operation mode. In a case where the MLO-only mmWave Link Independent Operation Support subfield is set to 1, the millimeter wave link on which the reported AP is located may support the independent operation mode; or in a case where the MLO-only mmWave Link Independent Operation Support subfield is set to 0, the millimeter wave link on which the reported AP is located does not support the independent operation mode.

**2) A representation format-II of the MLO-only managed and controlled link related information (implicitly indicating the millimeter wave link).**

In the MLD Parameters subfield of the TBTT Information field in the Neighbor AP Information field in the Reduced Neighbor Report element, content for defining an MLO-only Managed and Controlled Link Indication subfield and an MLO-only Link Independent Operation Support subfield is added.

The MLO-only Managed and Controlled Link Indication subfield indicates whether the reported AP operates on an MLO-only link managed and controlled by another link in the AP MLD to which the reported AP is affiliated. In a case where the MLO-only Managed and Controlled Link Indication subfield is set to 1, the reported AP operates on an MLO-only link managed and controlled by another link in the AP MLD to which the reported AP is affiliated; or in a case where the MLO-only Managed and Controlled Link Indication subfield is set to 0, the reported AP does not operate on an MLO-only link managed and controlled by another link in the AP MLD to which the reported AP is affiliated.

In a case where a value of the MLO-only Managed and Controlled Link Indication subfield is 1, the MLO-only Link Independent Operation Support subfield is optionally present, and if the MLO-only Managed and Controlled Link Indication subfield is not present, the corresponding bit is reserved. In a case where the value of the MLO-only Managed and Controlled Link Indication subfield is 0, the MLO-only Link Independent Operation Support subfield is not present, and the corresponding bit is reserved.

The MLO-only Link Independent Operation Support subfield indicates whether a link on which the reported AP is located in the AP MLD to which the reported AP is affiliated supports the MLO-only link to operate independently. In a case where the MLO-only Link Independent Operation Support subfield is set to 1, the link on which the reported AP is located in the AP MLD to which the reported AP is affiliated supports the MLO-only link to operate independently; or in a case where the MLO-only Link Independent Operation Support subfield is set to 0, the link on which the reported AP is located in the AP MLD to which the reported AP is affiliated does not support the MLO-only link to operate independently.

With respect to the MLO-only managed and controlled millimeter wave link, whether the link is an MLO-only managed and controlled millimeter wave link may be identified through the MLO-only Managed and Controlled Link Indication subfield included in the MLD Parameters subfield, and/or the MLO-only Link Independent Operation Support subfield in combination with a Supported Operating Classes element corresponding to the operation link of the reported AP. The Supported Operating Classes element corresponding to the operation link of the reported AP is carried in a frame in which the Reduced Neighbor Report element is transmitted.

**3) A representation format-III of the MLO-only managed and controlled link related information (in combination with the TBTT Information Field Type subfield and the TBTT Information Length subfield).**

The TBTT Information Field Type subfield takes a certain value (e.g., 2 or 3) to identify the format of the TBTT Information field corresponding to the reported AP operating on the MLO-only link managed and controlled by another link in combination with a value of the TBTT Information Length subfield (e.g., equal to 3 or greater than 3).

Content for defining the MLO-only Link Independent Operation Support subfield is added to the MLD Parameters subfield.

The MLO-only Link Independent Operation Support subfield indicates whether the link on which the reported AP is located in the AP MLD to which the reported AP is affiliated supports the MLO-only link to operate independently. In a case where the MLO-only Link Independent Operation Support subfield is set to 1, the link on which the reported AP is located in the AP MLD to which the reported AP is affiliated supports the MLO-only link to operate independently; or in a case where the MLO-only Link Independent Operation Support subfield is set to 0, the link on which the reported AP is located in the AP MLD to which the reported AP is affiliated does not support the MLO-only link to operate independently.

### II. Discovery and operation method of MLO-only mmW-S AP MLD

### 1. Discovery and operation method of MLO-only mmW-S AP MLD-Embodiment 1

An affiliated AP operating on a low-frequency managing and controlling link (or referred to as the primary link) in the MLO-only mmW-S AP MLD indicates that the MLO-only mmW-S AP MLD is an MLO-only mmW-S AP MLD type by setting bit B8 of an AP MLD Type Indication subfield of an MLD Capabilities and Operations subfield of a Common Info field in a Basic Multi-link element transmitted by the affiliated AP to 1; further, in a case where B8 is set to 1, B9 is set to 1 to indicate that the MLO-only mmW-S AP MLD is the MLO-only mmW-S AP MLD sub-type operating in the low-frequency managing and controlling link (or referred to as the primary link) mandatory enabled operation mode, or B9 is set to 0 to indicate the MLO-only mmW-S AP MLD sub-type operating in the low-frequency managing and controlling link (or referred to as the primary link) non-mandatory enabled operation mode.

The affiliated AP operating on the low-frequency managing and controlling link in the MLO-only mmW-S AP MLD includes a Reduced Neighbor Report element in the transmitted Beacon frame and Probe Response frame, and a TBTT Information field of the element carries an MLD Parameters subfield corresponding to a reported AP affiliated to the MLO-only mmW-S AP MLD and operating on the millimeter wave link.

The TBTT Information field corresponding to the reported AP operating on the MLO-only link managed and controlled by another link is identified over a TBTT Information Field Type subfield value in combination with a TBTT Information Length subfield, and it is identified that the reported AP operates on the MLO-only managed and controlled millimeter wave link over a Supported Operating Classes element corresponding to the operation link of the reported AP. For example, in a case where the TBTT Information Field Type subfield is 2 and the TBTT Information Length subfield is equal to 4, the TBTT Information field includes an MLD Parameters subfield having a length of three octets and a reserved field having a length of one octet. The TBTT Information field indicates information of the reported AP operating on the MLO-only managed and controlled millimeter wave link.

### 2. Discovery and operation method of MLO-only mmW-S AP MLD-Embodiment 2

An affiliated AP operating on a low-frequency managing and controlling link (or referred to as the primary link) in the MLO-only mmW-S AP MLD indicates that the MLO-only mmW-S AP MLD is an MLO-only mmW-S AP MLD type by setting bit B8 of an AP MLD Type Indication subfield of an MLD Capabilities and Operations subfield of a Common Info field in a Basic Multi-link element transmitted by the affiliated AP to 1; further, in a case where B8 is set to 1, B9 is set to 1 to indicate that the MLO-only mmW-S AP MLD is the MLO-only mmW-S AP MLD sub-type operating in the low-frequency managing and controlling link (or referred to as the primary link) mandatory enabled operation mode, or B9 is set to 0 to indicate the MLO-only mmW-S AP MLD sub-type operating in the low-frequency managing and controlling link (or referred to as the primary link) non-mandatory enabled operation mode.

The affiliated AP operating on the low-frequency managing and controlling link (or referred to as the primary link) in the MLO-only mmW-S AP MLD includes a Reduced Neighbor Report element in the transmitted Beacon frame and Probe Response frame, and a TBTT Information field of the element carries an MLD Parameters subfield corresponding to a reported AP affiliated to the MLO-only mmW-S AP MLD and operating on the millimeter wave link.

In the MLD Parameters subfield of the TBTT Information field in the Neighbor AP Information field in the Reduced Neighbor Report element, the MLO-only Managed and Controlled Link Indication subfield is set to 1 to indicate that the reported AP operates on the MLO-only link managed and controlled by another link. Further, by setting the MLO-only Link Independent Operation Support subfield to 1, the link on which the reported AP is located supports the MLO-only link to operate independently; or by setting the MLO-only Link Independent Operation Support subfield to 0, the link on which the reported AP is located does not support the MLO-only link to operate independently.

Meanwhile, it may be identified that the reported AP operates on the MLO-only managed and controlled millimeter wave link over the MLO-only Managed and Controlled Link Indication subfield included in the MLD Parameters subfield in combination with a millimeter wave operation frequency band and channel information included in the Supported Operating Classes element corresponding to the operation link of the reported AP, wherein the Supported Operating Classes element corresponding to the operation link of the reported AP is carried by the frame transmitting the Reduced Neighbor Report element.

### 3. Discovery and operation method of MLO-only mmW-S AP MLD-Embodiment 3

An affiliated AP operating on a low-frequency managing and controlling link in the MLO-only mmW-S AP MLD indicates that the MLO-only mmW-S AP MLD is an MLO-only mmW-S AP MLD type by setting bit B8 of an AP MLD Type Indication subfield of an MLD Capabilities and Operations subfield of a Common Info field in a Basic Multi-link element transmitted by the affiliated AP to 1; further, in a case where B8 is set to 1, B9 is set to 1 to indicate that the MLO-only mmW-S AP MLD is the MLO-only mmW-S AP MLD sub-type operating in the low-frequency managing and controlling link mandatory enabled operation mode, or B9 is set to 0 to indicate the MLO-only mmW-S AP MLD sub-type operating in the low-frequency managing and controlling link non-mandatory enabled operation mode.

The affiliated AP operating on the low-frequency managing and controlling link in the MLO-only mmW-S AP MLD includes a Reduced Neighbor Report element in the transmitted Beacon frame and Probe Response frame, and a TBTT Information field of the element carries an MLD Parameters subfield corresponding to a reported AP affiliated to the MLO-only mmW-S AP MLD and operating on the millimeter wave link.

It is indicated that the reported AP operates on the millimeter wave link managed and controlled by another link by setting an MLO-only mmWave Link Indication subfield to 1 in the MLD Parameters subfield of the TBTT Information field in the Neighbor AP Information field in the Reduced Neighbor Report element.

Further, it is indicated that the millimeter wave link on which the reported AP is located may support the independent operation mode by setting an MLO-only mmWave Link Independent Operation Support subfield to 1; or it is indicated that the millimeter wave link on which the reported AP is located does not support the independent operation mode by setting the MLO-only mmWave Link Independent Operation Support subfield to 0.

In order to solve the problems of large signal attenuation, susceptibility to blocking, short coverage distance, and high power consumption of millimeter wave communication devices in the millimeter wave communication, the present disclosure provides a method for MLD discovery and operation based on a millimeter wave link, in which the multi-link communication devices supporting millimeter wave communication is classified based on the MLO mode between the millimeter wave link and the low-frequency link, and functions and capabilities of the multi-link communication devices are released based on the types of the multi-link communication devices supporting millimeter wave communication to facilitate discovery by non-AP MLDs.

The embodiments of the present disclosure are mainly provided for the method for MLD discovery and operation based on a millimeter wave link, and may also be extended to discovery and operation of other types of MLDs (e.g., all operating on a low-frequency link).

FIG. 23 is a block diagram of an apparatus for MLD communication according to some embodiments of the present disclosure. The apparatus includes a transmitting module 2310, wherein a function of the transmitting module 2310 is implemented by a transmitter in an AP MLD.

The transmitting module 2310 is configured to transmit a first frame carrying first indication information, wherein the first indication information indicates whether AP MLD supports at least one of an MLO type or mode based on a managing and controlling link and a managed and controlled link, supports the managed and controlled link, supports a millimeter wave link, or supports a corresponding operation mode.

In some embodiments, the operation mode includes at least one of:
an MLO-only mode, wherein the MLO-only mode refers to a mode in which the managed and controlled link performs a multi-link setup based on the managing and controlling link, and/or a mode in which the managing and controlling link manages and/or controls the managed and controlled link in all states or some states based on the MLO; or
a non-MLO-only mode, wherein the non-MLO-only mode refers to a mode in which the managed and controlled link operates independently.

In some embodiments, the MLO-only mode includes at least one of a first operation mode or a second operation mode, wherein the first operation mode is a mode in which the managing and controlling link is in a mandatory enabled state, and the managing and controlling link manages and/or controls the managed and controlled link; and the second operation mode is a mode in which the managing and controlling link is in a non-mandatory enabled state, and the managing and controlling link manages and/or controls the managed and controlled link and/or the managed and controlled link operates independently in a case where the managing and controlling link is in an enabled state, or the managed and controlled link operates independently in a case where the managing and controlling link is in a disabled state.

In some embodiments, the managed and controlled link, when operating in an MLO-based independent operation mode (i.e., a managed and controlled link semi-independent operation mode), is used for transmitting at least one of the following management frames: a type 3 management frame in which a Beacon frame is individually addressed, an individually addressed deauthentication frame, an individually addressed disassociation frame, or an individually addressed multi-link probe request.

In some embodiments, the managed and controlled link, when operating in an MLO-based controlled operation mode (i.e., a managed and controlled link non-independent operation mode), is not used for transmitting at least one of the following management frames: a type 3 management frame in which a Beacon frame is individually addressed, an individually addressed deauthentication frame, an individually addressed disassociation frame, or an individually addressed multi-link probe request.

In some embodiments, the first operation mode is referred to as an MLO-based mandatory enabled operation mode of the managing and controlling link, or a non-independent operation mode of the managed and controlled link, or a mandatory enabled operation mode of the managing and controlling link; the second operation mode is referred to as an MLO-based non-mandatory enabled operation mode of the managing and controlling link, or a semi-independent operation mode of the managed and controlled link, or a non-mandatory enabled operation mode of the managing and controlling link; and the non-MLO-only mode is referred to as a non operation-only mode of multiple links or an independent operation mode of the managed and controlled link.

In some embodiments, the managing and controlling link includes a low-frequency link, and the managed and controlled link includes a millimeter wave link.

In some embodiments, the first indication information includes a first bit.

The first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or
the first bit indicates that the AP MLD supports the managed and controlled link in a case where the first bit takes a first value; or the first bit indicates that the AP MLD does not support the managed and controlled link in a case where the first bit takes a second value; or
the first bit indicates that the AP MLD supports the millimeter wave link in a case where the first bit takes a first value; or the first bit indicates that the AP MLD does not support the millimeter wave link in a case where the first bit takes a second value.

In some embodiments, the first indication information includes a second bit.

The second bit indicates an AP MLD type operating in an MLO-only mode in a case where the second bit takes a third value; or the second bit indicates an AP MLD type operating in a non-MLO-only mode in a case where the second bit takes a fourth value.

In some embodiments, the first indication information includes a second bit.

The second bit indicates an mmW-S AP MLD type operating in the MLO-only mode in a case where the second bit takes the third value and the managed and controlled link is the millimeter wave link; or the second bit indicates an mmW-S AP MLD type operating in the non-MLO-only mode in a case where the second bit takes the fourth value and the managed and controlled link is the millimeter wave link.

In some embodiments, the first indication information includes a third bit.

The third bit indicates an AP MLD sub-type operating in the first operation mode in a case where the third bit takes a fifth value; or the third bit indicates an AP MLD sub-type operating in the second operation mode in a case where the third bit takes a sixth value.

In some embodiments, the first indication information includes a third bit.

The third bit indicates an mmW-S AP MLD sub-type operating in the first operation mode in a case where the third bit takes the fifth value and the managed and controlled link is the millimeter wave link; or the third bit indicates an mmW-S AP MLD sub-type operating in the second operation mode in a case where the third bit takes the sixth value and the managed and controlled link is the millimeter wave link.

In some embodiments, the first indication information includes a fourth bit.

The fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

In some embodiments, the first indication information includes a fourth bit.

The fourth bit indicates that the AP MLD is not an MLO-only mmW-S AP MLD in a case where the fourth bit takes the seventh value and the managed and controlled link is the millimeter wave link; or the fourth bit indicates that the AP MLD is the MLO-only mmW-S AP MLD in a case where the fourth bit takes the eighth value and the managed and controlled link is the millimeter wave link.

In some embodiments, the first indication information includes a fifth bit.

The fifth bit indicates an AP MLD type operating in the first operation mode in a case where the fifth bit takes a ninth value; or the fifth bit indicates an AP MLD type operating in the second operation mode in a case where the fifth bit takes a tenth value.

In some embodiments, the first indication information includes a fifth bit.

The fifth bit indicates an mmW-S AP MLD type operating in the first operation mode in a case where the fifth bit takes the ninth value and the managed and controlled link is the millimeter wave link; or the fifth bit indicates an mmW-S AP MLD type operating in the second operation mode in a case where the fifth bit takes the tenth value and the managed and controlled link is the millimeter wave link.

In some embodiments, the first indication information includes an indication field including two bits.

In a case where the indication field takes a value of a first codepoint, an AP MLD type operating in the first operation mode is indicated. In a case where the indication field takes a value of a second codepoint, an AP MLD type operating in the second operation mode is indicated. In a case where the indication field takes a value of a third codepoint, an AP MLD type operating in the non-MLO-only mode is indicated.

In some embodiments, the first indication information includes an indication field including two bits.

In a case where the indication field takes the value of the first codepoint and the managed and controlled link is the millimeter wave link, an mmW-S AP MLD type operating in the first operation mode is indicated. In a case where the indication field takes the value of the second codepoint and the managed and controlled link is the millimeter wave link, an mmW-S AP MLD type operating in the second operation mode is indicated. In a case where the indication field takes the value of the third codepoint and the managed and controlled link is the millimeter wave link, an mmW-S AP MLD type operating in the non-MLO-only mode is indicated.

In some embodiments, the first indication information is carried in an AP MLD Type Indication subfield in an MLD Capabilities and Operations subfield of a Common Info field in a Basic Multi-link element.

In some embodiments, the first frame includes at least one of a Beacon frame, an Association Response frame, a Probe Response frame, or another management frame other than the Beacon frame, the Association Response frame, and the Probe Response frame.

In some embodiments, the AP MLD includes a first AP operating on the managing and controlling link, wherein the first AP transmits the first frame carrying the first indication information.

In some embodiments, the AP MLD includes a second AP; wherein the transmitting module 2310 is configured to transmit a second frame carrying second indication information, wherein the second indication information indicates an operating parameter of the second AP; or the transmitting module 2310 is configured to transmit the first frame carrying the first indication information and the second indication information.

In some embodiments, the second indication information includes a first field, wherein the first field indicates whether the second AP operates on an MLO-only millimeter wave link, or an MLO-only managed and controlled link, or a millimeter wave link, or the managed and controlled link in an affiliated AP MLD.

In some embodiments, the first field indicates that the second AP operates on the MLO-only millimeter wave link, or the MLO-only managed and controlled link, or the millimeter wave link, or the managed and controlled link in the affiliated AP MLD in a case where the first field takes an eleventh value; or the first field indicates that the second AP does not operate on the MLO-only millimeter wave link, or the MLO-only managed and controlled link, or the millimeter wave link, or the managed and controlled link in the affiliated AP MLD in a case where the first field takes a twelfth value.

In some embodiments, the second indication information includes a second field, wherein the second field indicates whether an MLO-only millimeter wave link, or an MLO-only managed and controlled link, or a millimeter wave link, or the managed and controlled link on which the second AP is located in an affiliated AP MLD supports independent operation.

In some embodiments, the second field indicates that the MLO-only millimeter wave link, or the MLO-only managed and controlled link, or the millimeter wave link, or the managed and controlled link on which the second AP is located in the affiliated AP MLD supports the independent operation in a case where the second field takes a thirteenth value; or the second field indicates that the MLO-only millimeter wave link, or the MLO-only managed and controlled link, or the millimeter wave link, or the managed and controlled link on which the second AP is located in the affiliated AP MLD does not support the independent operation in a case where the second field takes a fourteenth value.

In some embodiments, the second indication information is carried in an MLD Parameters subfield in a TBTT Information field in a Neighbor AP Information field in a Reduced Neighbor Report element.

In some embodiments, the second indication information includes a TBTT Type subfield value and a TBTT Information Length subfield. The TBTT Type subfield value takes a fifteenth value and the TBTT Information Length subfield takes a sixteenth value, which indicate that the second AP operates on an MLO-only managed and controlled link or the managed and controlled link in an affiliated AP MLD.

In some embodiments, in a case where the TBTT Type subfield value is 2 or 3 and the TBTT Information Length subfield is equal to or greater than 3, the second AP operates on the MLO-only managed and controlled link or the managed and controlled link in the affiliated AP MLD.

In some embodiments, the second indication information includes a second field, wherein the second field indicates whether the MLO-only managed and controlled link or the managed and controlled link on which the second AP is located in the affiliated AP MLD supports independent operation.

In some embodiments, the second field indicates that the MLO-only managed and controlled link or the managed and controlled link on which the second AP is located in the affiliated AP MLD supports the independent operation in a case where the second field takes a seventeenth value; or the second field indicates that the MLO-only managed and controlled link or the managed and controlled link on which the second AP is located in the affiliated AP MLD does not support the independent operation in a case where the second field takes an eighteenth value.

In some embodiments, the second frame includes at least one of a Beacon frame, an Association Response frame, a Probe Response frame, or another management frame other than the Beacon frame, the Association Response frame, and the Probe Response frame.

In some embodiments, the AP MLD includes a first AP operating on the managing and controlling link; wherein the first AP transmits the second frame carrying the second indication information, wherein the second indication information indicates the operating parameter of the second AP; or the first AP transmits the first frame carrying the first indication information and the second indication information.

In some embodiments, a TSF timer corresponding to the managing and controlling link is consistent with or the same as the TSF timer corresponding to the managed and controlled link.

In some embodiments, in the MLO-only mode, the managed and controlled link is a link set up based on the managing and controlling link, or the managed and controlled link is a link set up subsequenct to the managing and controlling link, or a procedure for setting up the managed and controlled link is performed based on the managing and controlling link.

In some embodiments, multiple links are set up by performing, in the MLO-only mode, during a multi-link setup process, frame exchange on the managing and controlling link during procedures of authentication, association or reassociation, and 4-way handshake, wherein the multiple links include the managing and controlling link and the managed and controlled link.

FIG. 24 is a block diagram of an apparatus for MLD communication according to some embodiments of the present disclosure. The apparatus includes a receiving module 2410, wherein a function of the receiving module 2410 is implemented by a receiver in a non-AP MLD.

The receiving module 2410 is configured to receive a first frame carrying first indication information, wherein the first indication information indicates whether an AP MLD corresponding to the non-AP MLD supports at least one of an MLO type or mode based on a managing and controlling link and a managed and controlled link, supports the managed and controlled link, supports a millimeter wave link, or supports a corresponding operation mode.

In some embodiments, the operation mode includes at least one of:
an MLO-only mode, wherein the MLO-only mode refers to a mode in which the managed and controlled link performs a multi-link setup based on the managing and controlling link, and/or a mode in which the managing and controlling link manages and/or controls the managed and controlled link in all states or some states based on the MLO; or
a non-MLO-only mode, wherein the non-MLO-only mode refers to a mode in which the managed and controlled link operates independently.

In some embodiments, the MLO-only mode includes at least one of a first operation mode or a second operation mode, wherein the first operation mode is a mode in which the managing and controlling link is in a mandatory enabled state, and the managing and controlling link manages and/or controls the managed and controlled link; and the second operation mode is a mode in which the managing and controlling link is in a non-mandatory enabled state, and the managing and controlling link manages and/or controls the managed and controlled link and/or the managed and controlled link operates independently in a case where the managing and controlling link is in an enabled state, or the managed and controlled link operates independently in a case where the managing and controlling link is in a disabled state.

In some embodiments, the first operation mode is referred to as an MLO-based mandatory enabled operation mode of the managing and controlling link, or a non-independent operation mode of the managing and controlling link, or a mandatory enabled operation mode of the managing and controlling link; the second operation mode is referred to as an MLO-based non-mandatory enabled operation mode of the managing and controlling link, or a semi-independent operation mode of the managed and controlled link, or a non-mandatory enabled operation mode of the managing and controlling link; and the non-MLO-only mode is referred to as a non operation-only mode of multiple links or an independent operation mode of the managed and controlled link.

In some embodiments, the managed and controlled link, when operating in an MLO-based independent operation mode (i.e., a managed and controlled link semi-independent operation mode), is used for transmitting at least one of the following management frames: a type 3 management frame in which a Beacon frame is individually addressed, an individually addressed deauthentication frame, an individually addressed disassociation frame, or an individually addressed multi-link probe request.

In some embodiments, the managed and controlled link, when operating in an MLO-based controlled operation mode (i.e., a managed and controlled link non-independent operation mode), is not used for transmitting at least one of the following management frames: a type 3 management frame in which a Beacon frame is individually addressed, an individually addressed deauthentication frame, an individually addressed disassociation frame, or an individually addressed multi-link probe request.

In some embodiments, the managing and controlling link includes a low-frequency link, and the managed and controlled link includes a millimeter wave link.

In some embodiments, the first indication information includes a first bit.

The first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or
the first bit indicates that the AP MLD supports the managed and controlled link in a case where the first bit takes a first value; or the first bit indicates that the AP MLD does not support the managed and controlled link in a case where the first bit takes a second value; or
the first bit indicates that the AP MLD supports the millimeter wave link in a case where the first bit takes a first value; or the first bit indicates that the AP MLD does not support the millimeter wave link in a case where the first bit takes a second value.

In some embodiments, the first indication information includes a second bit.

The second bit indicates an AP MLD type operating in an MLO-only mode in a case where the second bit takes a third value; or the second bit indicates an AP MLD type operating in a non-MLO-only mode in a case where the second bit takes a fourth value.

In some embodiments, the first indication information includes a second bit.

The second bit indicates an mmW-S AP MLD type operating in the MLO-only mode in a case where the second bit takes the third value and the managed and controlled link is the millimeter wave link; or the second bit indicates an mmW-S AP MLD type operating in the non-MLO-only mode in a case where the second bit takes the fourth value and the managed and controlled link is the millimeter wave link.

In some embodiments, the first indication information includes a third bit.

The third bit indicates an AP MLD sub-type operating in the first operation mode in a case where the third bit takes a fifth value; or the third bit indicates an AP MLD sub-type operating in the second operation mode in a case where the third bit takes a sixth value.

In some embodiments, the first indication information includes a third bit.

The third bit indicates an mmW-S AP MLD sub-type operating in the first operation mode in a case where the third bit takes the fifth value and the managed and controlled link is the millimeter wave link; or the third bit indicates an mmW-S AP MLD sub-type operating in the second operation mode in a case where the third bit takes the sixth value and the managed and controlled link is the millimeter wave link.

In some embodiments, the first indication information includes a fourth bit.

The fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

In some embodiments, the first indication information includes a fourth bit.

The fourth bit indicates that the AP MLD is not an MLO-only mmW-S AP MLD in a case where the fourth bit takes the seventh value and the managed and controlled link is the millimeter wave link; or the fourth bit indicates that the AP MLD is the MLO-only mmW-S AP MLD in a case where the fourth bit takes the eighth value and the managed and controlled link is the millimeter wave link.

In some embodiments, the first indication information includes a fifth bit.

The fifth bit indicates an AP MLD type operating in the first operation mode in a case where the fifth bit takes a ninth value; or the fifth bit indicates an AP MLD type operating in the second operation mode in a case where the fifth bit takes a tenth value.

In some embodiments, the first indication information includes a fifth bit.

The fifth bit indicates an mmW-S AP MLD type operating in the first operation mode in a case where the fifth bit takes the ninth value and the managed and controlled link is the millimeter wave link; or the fifth bit indicates an mmW-S AP MLD type operating in the second operation mode in a case where the fifth bit takes the tenth value and the managed and controlled link is the millimeter wave link.

In some embodiments, the first indication information includes an indication field including two bits.

In a case where the indication field takes a value of a first codepoint, an AP MLD type operating in the first operation mode is indicated. In a case where the indication field takes a value of a second codepoint, an AP MLD type operating in the second operation mode is indicated. In a case where the indication field takes a value of a third codepoint, an AP MLD type operating in the non-MLO-only mode is indicated.

In some embodiments, the first indication information includes an indication field including two bits.

In a case where the indication field takes the value of the first codepoint and the managed and controlled link is the millimeter wave link, an mmW-S AP MLD type operating in the first operation mode is indicated. In a case where the indication field takes the value of the second codepoint and the managed and controlled link is the millimeter wave link, an mmW-S AP MLD type operating in the second operation mode is indicated. In a case where the indication field takes the value of the third codepoint and the managed and controlled link is the millimeter wave link, an mmW-S AP MLD type operating in the non-MLO-only mode is indicated.

In some embodiments, the first indication information is carried in an AP MLD Type Indication subfield in an MLD Capabilities and Operations subfield of a Common Info field in a Basic Multi-link element.

In some embodiments, the first frame includes at least one of a Beacon frame, an Association Response frame, a Probe Response frame, or another management frame other than the Beacon frame, the Association Response frame, and the Probe Response frame.

In some embodiments, the non-AP MLD includes a first STA operating on the managing and controlling link; wherein the receiving module 2410 is configured for the first STA to receive the first frame carrying the first indication information.

In some embodiments, the AP MLD includes a second AP; wherein the receiving module 2410 is configured to receive a second frame carrying second indication information, wherein the second indication information indicates an operating parameter of the second AP; or the receiving module 2410 is configured to receive the first frame carrying the first indication information and the second indication information.

In some embodiments, the second indication information includes a first field, wherein the first field indicates whether the second AP operates on an MLO-only millimeter wave link, or an MLO-only managed and controlled link, or a millimeter wave link, or the managed and controlled link in an affiliated AP MLD.

In some embodiments, the first field indicates that the second AP operates on the MLO-only millimeter wave link, or the MLO-only managed and controlled link, or the millimeter wave link, or the managed and controlled link in the affiliated AP MLD in a case where the first field takes an eleventh value; or the first field indicates that the second AP does not operate on the MLO-only millimeter wave link, or the MLO-only managed and controlled link, or the millimeter wave link, or the managed and controlled link in the affiliated AP MLD in a case where the first field takes a twelfth value.

In some embodiments, the second indication information includes a second field, wherein the second field indicates whether an MLO-only millimeter wave link, or an MLO-only managed and controlled link, or a millimeter wave link, or the managed and controlled link on which the second AP is located in an affiliated AP MLD supports independent operation.

In some embodiments, the second field indicates that the MLO-only millimeter wave link, or the MLO-only managed and controlled link, or the millimeter wave link, or the managed and controlled link on which the second AP is located in the affiliated AP MLD supports the independent operation in a case where the second field takes a thirteenth value; or the second field indicates that the MLO-only millimeter wave link, or the MLO-only managed and controlled link, or the millimeter wave link, or the managed and controlled link on which the second AP is located in the affiliated AP MLD does not support the independent operation in a case where the second field takes a fourteenth value.

In some embodiments, the second indication information is carried in an MLD Parameters subfield in a TBTT Information field in a Neighbor AP Information field in a Reduced Neighbor Report element.

In some embodiments, the second indication information includes a TBTT Type subfield value and a TBTT Information Length subfield.

The TBTT Type subfield value takes a fifteenth value and the TBTT Information Length subfield takes a sixteenth value, which indicate that the second AP operates on an MLO-only managed and controlled link or the managed and controlled link in an affiliated AP MLD.

In some embodiments, in a case where the TBTT Type subfield value is 2 or 3 and the TBTT Information Length subfield is equal to or greater than 3, the second AP operates on the MLO-only managed and controlled link or the managed and controlled link in the affiliated AP MLD.

In some embodiments, the second indication information includes a second field, wherein the second field indicates whether the MLO-only managed and controlled link or the managed and controlled link on which the second AP is located in the affiliated AP MLD supports independent operation.

The second field indicates that the MLO-only managed and controlled link or the managed and controlled link on which the second AP is located in the affiliated AP MLD supports the independent operation in a case where the second field takes a seventeenth value; or the second field indicates that the MLO-only managed and controlled link or the managed and controlled link on which the second AP is located in the affiliated AP MLD does not support the independent operation in a case where the second field takes an eighteenth value.

In some embodiments, the second frame includes at least one of a Beacon frame, an Association Response frame, a Probe Response frame, or another management frame other than the Beacon frame, the Association Response frame, and the Probe Response frame.

In some embodiments, the non-AP MLD includes a first STA operating on the managing and controlling link; wherein the first STA receives the second frame carrying the second indication information, wherein the second indication information indicates the operating parameter of the second AP; or the first STA receives the first frame carrying the first indication information and the second indication information.

In some embodiments, a TSF timer corresponding to the managing and controlling link is consistent with or the same as the TSF timer corresponding to the managed and controlled link.

In some embodiments, in the MLO-only mode, the managed and controlled link is a link set up based on the managing and controlling link, or the managed and controlled link is a link set up subsequent to the managing and controlling link, or a procedure for setting up the managed and controlled link is performed based on the managing and controlling link.

In some embodiments, multiple links are set up by performing, in the MLO-only mode, during a multi-link setup process, frame exchange on the managing and controlling link during procedures of authentication, association or reassociation, and 4-way handshake, wherein the multiple links include the managing and controlling link and the managed and controlled link.

FIG. 25 is a schematic structural diagram of an AP MLD or a non-AP MLD 2500 according to some embodiments of the present disclosure. The AP MLD or the non-AP MLD includes: a processor 2501, a receiver 2502, a transmitter 2503, a memory 2504, and a bus 2505.

The processor 2501 includes one or more processing cores, and the processor 2501 executes various functional applications and performs information processing by running software programs and modules.

The receiver 2502 and the transmitter 2503 may be implemented as one communication assembly, which may be one communication chip and may be referred to as a transceiver. In some embodiments, the receiver 2502 is configured to perform the functions and processes of the above receiving module 2410, and the transmitter 2503 is configured to perform the functions and processes of the above transmitting module 2310.

The memory 2504 is connected to the processor 2501 over the bus 2505.

The memory 2504 is configured to store at least one instruction, and the processor 2501 is configured to execute the at least one instruction to perform the processes in the above method embodiments.

In addition, the memory 2504 may be implemented by any type or combination of volatile or non-volatile storage devices including, but not limited to: magnetic or optical disks, electrically-erasable programmable read-only memories (EEPROMs), erasable programmable read-only memories (EPROMs), static random access memories (SRAMs), read-only memories (ROMs), magnetic memories, flash memories, and programmable read-only memories (PROMs).

In some embodiments, the receiver 2502 independently receives signals/data, or the processor 2501 controls the receiver 2502 to receive signals/data, or the processor 2501 requests the receiver 2502 to receive signals/data, or the processor 2501 cooperates with the receiver 2502 to receive signals/data.

In some embodiments, the transmitter 2503 independently transmits signals/data, or the processor 2501 controls the transmitter 2503 to transmit signals/data, or the processor 2501 requests the transmitter 2503 to transmit signals/data, or the processor 2501 cooperates with the transmitter 2503 to transmit signals/data.

In some embodiments, a computer-readable storage medium is further provided. The computer-readable storage medium stores at least one instruction, at least one program, a code set, or an instruction set therein. The at least one instruction, the at least one program, the code set, or the instruction set, when loaded and executed by a processor, causes the processor to perform the method for MLD communication as defined in the above method embodiments.

In some embodiments, a computer program product or a computer program is further provided. The computer program product or the computer program, when running on a processor, causes an AP MLD or a non-AP MLD to perform the method for MLD communication as defined in the above method embodiments.

It should be understood by those of ordinary skill in the art that all or a part of the processes for perform the above embodiments are completed by hardware, or are completed by instructing relevant hardware by a program stored in a computer-readable storage medium. The storage medium mentioned above is a read-only memory, a magnetic disk, a compact disk, or the like.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for multi-link device (MLD) communication, performed by an access point (AP) MLD, the method comprising:
transmitting a first frame carrying first indication information, wherein the first indication information indicates whether the AP MLD supports at least one of a multi-link operation (MLO) type or mode based on a managing and controlling link and a managed and controlled link, supports the managed and controlled link, supports a millimeter wave link, or supports a corresponding operation mode.

2. The method according to claim 1, wherein the operation mode comprises at least one of:
an MLO-only mode, wherein the MLO-only mode refers to a mode in which the managed and controlled link performs a multi-link setup based on the managing and controlling link, and/or a mode in which the managing and controlling link manages and/or controls the managed and controlled link in all states or some states based on the MLO; or
a non-MLO-only mode, wherein the non-MLO-only mode refers to a mode in which the managed and controlled link operates independently.

3. The method according to claim 2, wherein the MLO-only mode comprises at least one of a first operation mode or a second operation mode, wherein
the first operation mode is a mode in which the managing and controlling link is in a mandatory enabled state, and the managing and controlling link manages and/or controls the managed and controlled link; and
the second operation mode is a mode in which the managing and controlling link is in a non-mandatory enabled state, and the managing and controlling link manages and/or controls the managed and controlled link and/or the managed and controlled link operates independently in a case where the managing and controlling link is in an enabled state, or the managed and controlled link operates independently in a case where the managing and controlling link is in a disabled state.

4. The method according to claim 3, wherein
the first operation mode is referred to as an MLO-based mandatory enabled operation mode of the managing and controlling link, or a non-independent operation mode of the managed and controlled link, or a mandatory enabled operation mode of the managing and controlling link;
the second operation mode is referred to as an MLO-based non-mandatory enabled operation mode of the managing and controlling link, or a semi-independent operation mode of the managed and controlled link, or a non-mandatory enabled operation mode of the managing and controlling link; and
the non-MLO-only mode is referred to as a non operation-only mode of multiple links or an independent operation mode of the managed and controlled link.

5. The method according to any one of claims 2 to 4, wherein the managing and controlling link comprises a low-frequency link, and the managed and controlled link comprises the millimeter wave link.

6. The method according to any one of claims 1 to 5, wherein the first indication information comprises a first bit; wherein
the first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or
the first bit indicates that the AP MLD supports the managed and controlled link in a case where the first bit takes a first value; or the first bit indicates that the AP MLD does not support the managed and controlled link in a case where the first bit takes a second value; or
the first bit indicates that the AP MLD supports the millimeter wave link in a case where the first bit takes a first value; or the first bit indicates that the AP MLD does not support the millimeter wave link in a case where the first bit takes a second value.

7. The method according to claim 2, wherein the first indication information comprises a second bit;
wherein the second bit indicates an AP MLD type operating in the MLO-only mode in a case where the second bit takes a third value; or the second bit indicates an AP MLD type operating in the non-MLO-only mode in a case where the second bit takes a fourth value.

8. The method according to claim 2, 3, 4, or 7 wherein the first indication information comprises a second bit;
wherein the second bit indicates a millimeter wave link-supported access point multi-link device (mmW-S AP MLD) type operating in the MLO-only mode in a case where the second bit takes a third value and the managed and controlled link is the millimeter wave link; or the second bit indicates an mmW-S AP MLD type operating in the non-MLO-only mode in a case where the second bit takes a fourth value and the managed and controlled link is the millimeter wave link.

9. The method according to claim 3 or 4, wherein the first indication information comprises a third bit;
wherein the third bit indicates an AP MLD sub-type operating in the first operation mode in a case where the third bit takes a fifth value; or the third bit indicates an AP MLD sub-type operating in the second operation mode in a case where the third bit takes a sixth value.

10. The method according to claim 3, 4, or 9, wherein the first indication information comprises a third bit;
wherein the third bit indicates a millimeter wave link-supported access point multi-link device (mmW-S AP MLD) sub-type operating in the first operation mode in a case where the third bit takes a fifth value and the managed and controlled link is the millimeter wave link; or the third bit indicates an mmW-S AP MLD sub-type operating in the second operation mode in a case where the third bit takes a sixth value and the managed and controlled link is the millimeter wave link.

11. The method according to claim 2, wherein the first indication information comprises a fourth bit;
wherein the fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

12. The method according to claim 2, 3, 4, or 11 wherein the first indication information comprises a fourth bit;
wherein the fourth bit indicates that the AP MLD is not an MLO-only millimeter wave link-supported access point multi-link device (mmW-S AP MLD) in a case where the fourth bit takes a seventh value and the managed and controlled link is the millimeter wave link; or the fourth bit indicates that the AP MLD is the MLO-only mmW-S AP MLD in a case where the fourth bit takes an eighth value and the managed and controlled link is the millimeter wave link.

13. The method according to claim 3 or 4, wherein the first indication information comprises a fifth bit;
wherein the fifth bit indicates an AP MLD type operating in the first operation mode in a case where the fifth bit takes a ninth value; or the fifth bit indicates an AP MLD type operating in the second operation mode in a case where the fifth bit takes a tenth value.

14. The method according to claim 3, 4, or 13, wherein the first indication information comprises a fifth bit;
wherein the fifth bit indicates a millimeter wave link-supported access point multi-link device (mmW-S AP MLD) type operating in the first operation mode in a case where the fifth bit takes a ninth value and the managed and controlled link is the millimeter wave link; or the fifth bit indicates an mmW-S AP MLD type operating in the second operation mode in a case where the fifth bit takes a tenth value and the managed and controlled link is the millimeter wave link.

15. The method according to claim 3 or 4, wherein the first indication information comprises an indication field comprising two bits; wherein
in a case where the indication field takes a value of a first codepoint, the indication field indicates an AP MLD type operating in the first operation mode;
in a case where the indication field takes a value of a second codepoint, the indication field indicates an AP MLD type operating in the second operation mode; or
in a case where the indication field takes a value of a third codepoint, the indication field indicates an AP MLD type operating in the non-MLO-only mode.

16. The method according to claim 3, 4, or 15, wherein the first indication information comprises an indication field comprising two bits; wherein
in a case where the indication field takes a value of a first codepoint and the managed and controlled link is the millimeter wave link, the indication field indicates a millimeter wave link-supported access point multi-link device (mmW-S AP MLD) type operating in the first operation mode;
in a case where the indication field takes a value of a second codepoint and the managed and controlled link is the millimeter wave link, the indication field indicates an mmW-S AP MLD type operating in the second operation mode; or
in a case where the indication field takes a value of a third codepoint and the managed and controlled link is the millimeter wave link, the indication field indicates an mmW-S AP MLD type operating in the non-MLO-only mode.

17. The method according to any one of claims 1 to 16, wherein the first indication information is carried in an AP MLD Type Indication subfield in an MLD Capabilities and Operations subfield of a Common Information field in a Basic Multi-link element.

18. The method according to any one of claims 1 to 16, wherein the first frame comprises at least one of:
a Beacon frame;
an Association Response frame;
a Probe Response frame; or
another management frame other than the Beacon frame, the Association Response frame, and the Probe Response frame.

19. The method according to any one of claims 1 to 18, wherein the AP MLD comprises a first AP operating on the managing and controlling link; and transmitting the first frame carrying the first indication information comprises:
transmitting, by the first AP, the first frame carrying the first indication information.

20. The method according to any one of claims 1 to 19, wherein the AP MLD comprises a second AP; and the method further comprises:
transmitting a second frame carrying second indication information, wherein the second indication information indicates an operating parameter of the second AP; or
transmitting the first frame carrying the first indication information and second indication information, wherein the second indication information indicates an operating parameter of the second AP.

21. The method according to claim 20, wherein the second indication information comprises a first field, wherein the first field indicates whether the second AP operates on an MLO-only millimeter wave link, or an MLO-only managed and controlled link, or a millimeter wave link, or the managed and controlled link in an affiliated AP MLD.

22. The method according to claim 21, wherein
the first field indicates that the second AP operates on the MLO-only millimeter wave link, or the MLO-only managed and controlled link, or the millimeter wave link, or the managed and controlled link in the affiliated AP MLD in a case where the first field takes an eleventh value; or
the first field indicates that the second AP does not operate on the MLO-only millimeter wave link, or the MLO-only managed and controlled link, or the millimeter wave link, or the managed and controlled link in the affiliated AP MLD in a case where the first field takes a twelfth value.

23. The method according to claim 20, wherein the second indication information comprises a second field, wherein the second field indicates whether an MLO-only millimeter wave link, or an MLO-only managed and controlled link, or a millimeter wave link, or the managed and controlled link on which the second AP is located in an affiliated AP MLD supports an independent operation.

24. The method according to claim 23, wherein
the second field indicates that the MLO-only millimeter wave link, or the MLO-only managed and controlled link, or the millimeter wave link, or the managed and controlled link on which the second AP is located in the affiliated AP MLD supports the independent operation in a case where the second field takes a thirteenth value; or
the second field indicates that the MLO-only millimeter wave link, or the MLO-only managed and controlled link, or the millimeter wave link, or the managed and controlled link on which the second AP is located in the affiliated AP MLD does not support the independent operation in a case where the second field takes a fourteenth value.

25. The method according to claim 20, wherein the second indication information is carried in an MLD Parameters subfield in a Target Beacon Transmission Time (TBTT) Information field in a Neighbor AP Information field in a Reduced Neighbor Report element.

26. The method according to claim 25, wherein the second indication information comprises a TBTT Type subfield value and a TBTT Information Length subfield, wherein
the TBTT Type subfield takes a fifteenth value and the TBTT Information Length subfield takes a sixteenth value, which indicates that the second AP operates on an MLO-only managed and controlled link or the managed and controlled link in an affiliated AP MLD.

27. The method according to claim 26, wherein in a case where the TBTT Type subfield value is 2 or 3 and the TBTT Information Length subfield is equal to or greater than 3, the TBTT Type subfield and the TBTT Information Length subfield indicate that the second AP operates on the MLO-only managed and controlled link or the managed and controlled link in the affiliated AP MLD.

28. The method according to claim 27, wherein the second indication information comprises a second field, wherein the second field indicates whether the MLO-only managed and controlled link or the managed and controlled link on which the second AP is located in the affiliated AP MLD supports an independent operation.

29. The method according to claim 28, wherein
the second field indicates that the MLO-only managed and controlled link or the managed and controlled link on which the second AP is located in the affiliated AP MLD supports the independent operation in a case where the second field takes a seventeenth value; or
the second field indicates that the MLO-only managed and controlled link or the managed and controlled link on which the second AP is located in the affiliated AP MLD does not support the independent operation in a case where the second field takes an eighteenth value.

30. The method according to any one of claims 20 to 29, wherein the second frame comprises at least one of:
a Beacon frame;
an Association Response frame;
a Probe Response frame; or
another management frame other than the Beacon frame, the Association Response frame, and the Probe Response frame.

31. The method according to any one of claims 20 to 30, wherein the AP MLD comprises a first AP operating on the managing and controlling link, and transmitting the second frame carrying the second indication information, wherein the second indication information indicates the operating parameter of the second AP; or transmitting the first frame carrying the first indication information and the second indication information comprises:
transmitting, by the first AP, the second frame carrying the second indication information, wherein the second indication information indicates the operating parameter of the second AP; or
transmitting, by the first AP, the first frame carrying the first indication information and the second indication information.

32. The method according to claim 19, wherein a timing synchronization function (TSF) timer corresponding to the managing and controlling link is consistent with or the same as a TSF timer corresponding to the managed and controlled link.

33. The method according to claims 2 to 32, wherein in the MLO-only mode, the managed and controlled link is a link set up based on the managing and controlling link, or the managed and controlled link is a link set up subsequent to the managing and controlling link, or a procedure for setting up the managed and controlled link is performed based on the managing and controlling link.

34. The method according to any one of claims 2 to 33, further comprising:
setting up multiple links by performing, in the MLO-only mode, during a multi-link setup process, frame exchange on the managing and controlling link during procedures of authentication, association or reassociation, and 4-way handshake, wherein the multiple links comprise the managing and controlling link and the managed and controlled link.

35. A method for multi-link device (MLD) communication, performed by a non-access point (non-AP) MLD, the method comprising:
receiving a first frame carrying first indication information, wherein the first indication information indicates whether an access point (AP) MLD corresponding to the non-AP MLD supports at least one of a multi-link operation (MLO) type or mode based on a managing and controlling link and a managed and controlled link, supports the managed and controlled link, supports a millimeter wave link, or supports a corresponding operation mode.

36. The method according to claim 35, wherein the operation mode comprises at least one of:
an MLO-only mode, wherein the MLO-only mode refers to a mode in which the managed and controlled link performs a multi-link setup based on the managing and controlling link, and/or a mode in which the managing and controlling link manages and/or controls the managed and controlled link in all states or some states based on the MLO; or
a non-MLO-only mode, wherein the non-MLO-only mode refers to a mode in which the managed and controlled link operates independently.

37. The method according to claim 36, wherein the MLO-only mode comprises at least one of a first operation mode or a second operation mode; wherein
the first operation mode is a mode in which the managing and controlling link is in a mandatory enabled state, and the managing and controlling link manages and/or controls the managed and controlled link; and
the second operation mode is a mode in which the managing and controlling link is in a non-mandatory enabled state, and the managing and controlling link manages and/or controls the managed and controlled link and/or the managed and controlled link operates independently in a case where the managing and controlling link is in an enabled state, or the managed and controlled link operates independently in a case where the managing and controlling link is in a disabled state.

38. The method according to claim 37, wherein
the first operation mode is referred to as an MLO-based mandatory enabled operation mode of the managing and controlling link, or a non-independent operation mode of the managed and controlled link, or a mandatory enabled operation mode of the managing and controlling link;
the second operation mode is referred to as an MLO-based non-mandatory enabled operation mode of the managing and controlling link, or a semi-independent operation mode of the managed and controlled link, or a non-mandatory enabled operation mode of the managing and controlling link; and
the non-MLO-only mode is referred to as a non-operation-only mode of multiple links or an independent operation mode of the managed and controlled link.

39. The method according to any one of claims 36 to 38, wherein the managing and controlling link comprises a low-frequency link, and the managed and controlled link comprises the millimeter wave link.

40. The method according to any one of claims 35 to 39, wherein the first indication information comprises a first bit; wherein
the first bit indicates that the AP MLD supports the MLO type or mode based on the managing and controlling link and the managed and controlled link in a case where the first bit takes a first value; or the first bit indicates that the AP MLD does not support the MLO type or mode based on the managing and controlling link and the managed and controlled link in a case where the first bit takes a second value; or
the first bit indicates that the AP MLD supports the managed and controlled link in a case where the first bit takes a first value; or the first bit indicates that the AP MLD does not support the managed and controlled link in a case where the first bit takes a second value; or
the first bit indicates that the AP MLD supports the millimeter wave link in a case where the first bit takes a first value; or the first bit indicates that the AP MLD does not support the millimeter wave link in a case where the first bit takes a second value.

41. The method according to claim 36, wherein the first indication information comprises a second bit;
wherein the second bit indicates an AP MLD type operating in the MLO-only mode in a case where the second bit takes a third value; or the second bit indicates an AP MLD type operating in the non-MLO-only mode in a case where the second bit takes a fourth value.

42. The method according to claim 36, 37, 38, or 41 wherein the first indication information comprises a second bit;
wherein the second bit indicates a millimeter wave link-supported access point multi-link device (mmW-S AP MLD) type operating in the MLO-only mode in a case where the third bit takes a third value and the managed and controlled link is the millimeter wave link; or the second bit indicates an mmW-S AP MLD type operating in the non-MLO-only mode in a case where the third bit takes a fourth value and the managed and controlled link is the millimeter wave link.

43. The method according to claim 37 or 38, wherein the first indication information comprises a third bit;
wherein the third bit indicates an AP MLD sub-type operating in the first operation mode in a case where the third bit takes a fifth value; or the third bit indicates an AP MLD sub-type operating in the second operation mode in a case where the third bit takes a sixth value.

44. The method according to claim 37, 38, or 43, wherein the first indication information comprises a third bit;
wherein the third bit indicates a millimeter wave link-supported access point multi-link device (mmW-S AP MLD) sub-type operating in the first operation mode in a case where the third bit takes a fifth value and the managed and controlled link is the millimeter wave link; or the third bit indicates an mmW-S AP MLD sub-type operating in the second operation mode in a case where the third bit takes a sixth value and the managed and controlled link is the millimeter wave link.

45. The method according to claim 36, wherein the first indication information comprises a fourth bit;
wherein the fourth bit indicates that the AP MLD is not an MLO-only AP MLD in a case where the fourth bit takes a seventh value; or the fourth bit indicates that the AP MLD is the MLO-only AP MLD in a case where the fourth bit takes an eighth value.

46. The method according to claim 36, 37, 38, or 45 wherein the first indication information comprises a fourth bit;
wherein the fourth bit indicates that the AP MLD is not an MLO-only millimeter wave link-supported access point multi-link device (mmW-S AP MLD) in a case where the fourth bit takes a seventh value and the managed and controlled link is the millimeter wave link; or the fourth bit indicates that the AP MLD is the MLO-only mmW-S AP MLD in a case where the fourth bit taks an eighth value and the managed and controlled link is the millimeter wave link.

47. The method according to claim 37 or 38, wherein the first indication information comprises a fifth bit;
wherein the fifth bit indicates an AP MLD type operating in the first operation mode in a case where the fifth bit takes a ninth value; or the fifth bit indicates an AP MLD type operating in the second operation mode in a case where the fifth bit takes a tenth value.

48. The method according to claim 37, 38, or 47, wherein the first indication information comprises a fifth bit;
wherein the fifth bit indicates a millimeter wave link-supported access point multi-link device (mmW-S AP MLD) type operating in the first operation mode in a case where the fifth bit takes a ninth value and the managed and controlled link is the millimeter wave link; or the fifth bit indicates an mmW-S AP MLD type operating in the second operation mode in a case where the fifth bit takes a tenth value and the managed and controlled link is the millimeter wave link.

49. The method according to claim 37 or 38, wherein the first indication information comprises an indication field comprising two bits; wherein
in a case where the indication field takes a value of a first codepoint, the first indication information indicates an AP MLD type operating in the first operation mode;
in a case where the indication field takes a value of a second codepoint, the first indication information indicates an AP MLD type operating in the second operation mode; or
in a case where the indication field takes a value of a third codepoint, the first indication information indicates an AP MLD type operating in the non-MLO-only mode.

50. The method according to claim 37, 38, or 49, wherein the first indication information comprises an indication field comprising two bits; wherein
in a case where the indication field takes a value of a first codepoint and the managed and controlled link is the millimeter wave link, the first indication information indicates a millimeter wave link-supported access point multi-link device (mmW-S AP MLD) type operating in the first operation mode;
in a case where the indication field takes a value of a second codepoint and the managed and controlled link is the millimeter wave link, the first indication information indicates an mmW-S AP MLD type operating in the second operation mode; or
in a case where the indication field takes a value of a third codepoint and the managed and controlled link is the millimeter wave link, the first indication information indicates an mmW-S AP MLD type operating in the non-MLO-only mode.

51. The method according to any one of claims 35 to 49, wherein the first indication information is carried in an AP MLD Type Indication subfield in an MLD Capabilities and Operations subfield of a Common Information field in a Basic Multi-link element.

52. The method according to any one of claims 35 to 49, wherein the first frame comprises at least one of:
a Beacon frame;
an Association Response frame;
a Probe Response frame; or
another management frame other than the Beacon frame, the Association Response frame, and the Probe Response frame.

53. The method according to any one of claims 35 to 52, wherein the non-AP MLD comprises a first station (STA) operating on a managing and controlling link; and receiving the first frame carrying the first indication information, comprises:
receiving, by the first STA, the first frame carrying the first indication information.

54. The method according to any one of claims 35 to 53, wherein the AP MLD comprises a second access point AP; and the method further comprises:
receiving a second frame carrying second indication information, wherein the second indication information indicates an operating parameter of the second AP; or
receiving the first frame carrying the first indication information and second indication information, wherein the second indication information indicates an operating parameter of the second AP.

55. The method according to claim 54, wherein the second indication information comprises a first field, wherein the first field indicates whether the second AP operates on an MLO-only millimeter wave link, or an MLO-only managed and controlled link, or a millimeter wave link, or the managed and controlled link in an affiliated AP MLD.

56. The method according to claim 55, wherein
the first field indicates that the second AP operates on the MLO-only millimeter wave link, or the MLO-only managed and controlled link, or the millimeter wave link, or the managed and controlled link in the affiliated AP MLD in a case where the first field takes an eleventh value; or
the first field indicates that the second AP does not operate on the MLO-only millimeter wave link, or the MLO-only managed and controlled link, or the millimeter wave link, or the managed and controlled link in the affiliated AP MLD in a case where the first field takes a twelfth value.

57. The method according to claim 54, wherein the second indication information comprises a second field, wherein the second field indicates whether an MLO-only millimeter wave link, or an MLO-only managed and controlled link, or a millimeter wave link, or the managed and controlled link on which the second AP is located in an affiliated AP MLD supports an independent operation.

58. The method according to claim 57, wherein
the second field indicates that the MLO-only millimeter wave link, or the MLO-only managed and controlled link, or the millimeter wave link, or the managed and controlled link on which the second AP is located in the affiliated AP MLD supports the independent operation in a case where the second field takes a thirteenth value; or
the second field indicates that the MLO-only millimeter wave link, or the MLO-only managed and controlled link, or the millimeter wave link, or the managed and controlled link on which the second AP is located in the affiliated AP MLD does not support the independent operation in a case where the second field takes a fourteenth value.

59. The method according to claim 54, wherein the second indication information is carried in an MLD Parameters subfield in a Target Beacon Transmission Time (TBTT) Information field in a Neighbor AP Information field in a Reduced Neighbor Report element.

60. The method according to claim 59, wherein the second indication information comprises a TBTT Type subfield value and a TBTT Information Length subfield, wherein
the TBTT Type subfield value takes a fifteenth value and the TBTT Information Length subfield takes a sixteenth value, which indicates that the second AP operates on an MLO-only managed and controlled link or the managed and controlled link in an affiliated AP MLD.

61. The method according to claim 60, wherein in a case where the TBTT Type subfield value is 2 or 3 and the TBTT Information Length subfield is equal to or greater than 3, the TBTT Type subfield and the TBTT Information Length subfield indicate that the second AP operates on the MLO-only managed and controlled link or the managed and controlled link in the affiliated AP MLD.

62. The method according to claim 61, wherein the second indication information comprises a second field, wherein the second field indicates whether the MLO-only managed and controlled link or the managed and controlled link on which the second AP is located in the affiliated AP MLD supports independent operation.

63. The method according to claim 62, wherein
the second field indicates that the MLO-only managed and controlled link or the managed and controlled link on which the second AP is located in the affiliated AP MLD supports the independent operation in a case where the second field takes a seventeenth value; or
the second field indicates that the MLO-only managed and controlled link or the managed and controlled link on which the second AP is located in the affiliated AP MLD does not support the independent operation in a case where the second field takes an eighteenth value.

64. The method according to any one of claims 54 to 63, wherein the second frame comprises at least one of:
a Beacon frame;
an Association Response frame;
a Probe Response frame; or
another management frame other than the Beacon frame, the Association Response frame, and the Probe Response frame.

65. The method according to any one of claims 54 to 64, wherein the non-AP MLD comprises a first station (STA) operating on the managing and controlling link, and receiving the second frame carrying the second indication information, wherein the second indication information indicates the operating parameter of the second AP; or receiving the first frame carrying the first indication information and the second indication information comprises:
receiving, by the first STA, the second frame carrying the second indication information, wherein the second indication information indicates the operating parameter of the second AP; or
receiving, by the first STA, the first frame carrying the first indication information and the second indication information.

66. The method according to claim 53, wherein a timing synchronization function (TSF) timer corresponding to the managing and controlling link is consistent with or the same as a TSF timer corresponding to the managed and controlled link.

67. The method according to claims 36 to 66, wherein in the MLO-only mode, the managed and controlled link is a link set up based on the managing and controlling link, or the managed and controlled link is a link set up subsequent to the managing and controlling link, or a procedure for setting up the managed and controlled link is performed based on the managing and controlling link.

68. The method according to any one of claims 36 to 67, further comprising:
setting up multiple links by performing, in the MLO-only mode, during a multi-link setup process, frame exchange on the managing and controlling link during procedures of authentication, association or reassociation, and 4-way handshake, wherein the multiple links comprise the managing and controlling link and the managed and controlled link.

69. An apparatus for multi-link device (MLD) communication, comprising:
a transmitting module, configured to transmit a first frame carrying first indication information, wherein the first indication information indicates whether an access point (AP) MLD supports at least one of a multi-link operation (MLO) type or mode based on a managing and controlling link and a managed and controlled link, supports the managed and controlled link, supports a millimeter wave link, or supports a corresponding operation mode.

70. An apparatus for multi-link device (MLD) communication, comprising:
a receving module, configured to receive a first frame carrying first indication information, wherein the first indication information indicates whether an access point (AP) MLD corresponding to a non-access point (non-AP) MLD supports at least one of a multi-link operation (MLO) type or mode based on a managing and controlling link and a managed and controlled link, supports the managed and controlled link, supports a millimeter wave link, or supports a corresponding operation mode.

71. An access point multi-link device (MLD), comprising:
a processor;
a transceiver, connected to the processor; and
a memory, configured to store one or more executable instructions of the processor,
wherein the processor is configured to load and execute the one or more executable instructions to perform the method for MLD communication as defined in any one of claims 1 to 34.

72. A non-access point multi-link device (MLD), comprising:
a processor;
a transceiver, connected to the processor; and
a memory, configured to store one or more executable instructions of the processor,
wherein the processor is configured to load and execute the one or more executable instructions to perform the method for MLD communication as defined in any one of claims 35 to 68.

73. A computer-readable storage medium storing one or more computer programs, wherein the one or more computer programs, when loaded and run by a processor, cause the processor to perform the method for multi-link device (MLD) communication as defined in any one of claims 1 to 68.

74. A computer program product, comprising one or more computer instructions stored in a computer-readable storage medium, wherein the one or more computer instructions, when read from the computer-readable storage medium and loaded and executed by a processor, cause the processor to perform the method for multi-link device (MLD) communication as defined in any one of claims 1 to 68.
